# EUROPÄISCHE PATENTANMELDUNG

(11) **EP 3 173 741 A1**
(43) Veröffentlichungstag der Anmeldung: **31.05.2017**
(21) Anmeldenummer: 15197026.6
(22) Anmeldetag: 30.11.2015
(51) Int. Cl.: G01C 15/00, G01C 25/00

(54) **VERFAHREN ZUM ÜBERPRÜFEN UND/ODER KALIBRIEREN EINER HORIZONTALACHSE EINES ROTATIONSLASERS**

(71) Anmelder: HILTI Aktiengesellschaft, 9494 Schaan (LI)
(72) Erfinder: Lukic, Sasha, 9470 Buchs (CH); Sanchen, Guenter, 9472 Grabs (CH)
(74) Vertreter: Hilti Aktiengesellschaft Corporate Intellectual Property

(57) **Zusammenfassung**

Verfahren zum Überprüfen und/oder Kalibrieren einer ersten oder zweiten Horizontalachse eines Rotationslasers (11), der einen um eine Rotationsachse (21) rotierbaren Laserstrahl (22) aussendet, mit Hilfe eines Laserempfängers (12). Der Rotationslaser (11) wird in einer Messentfernung zum Laserempfänger (12) positioniert, wobei der Rotationslaser (11) in Horizontallage und der Laserempfänger (12) in Längsanordnung ausgerichtet werden.

## Beschreibung

### Technisches Gebiet

Die vorliegende Erfindung betrifft ein Verfahren zum Überprüfen und/oder zum Kalibrieren einer Horizontalachse eines Rotationslasers gemäß dem Oberbegriff des Anspruchs 1.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Um die Genauigkeit eines Rotationslasers im Betrieb zu gewährleisten, muss die Genauigkeit regelmäßig überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft. Bekannt sind Verfahren zum Überprüfen und/oder Kalibrieren einer Horizontalachse und Verfahren zum Überprüfen und/oder Kalibrieren einer Vertikalachse. Bei horizontal einsetzbaren Rotationslasern werden nacheinander die erste und zweite Horizontalachse überprüft, wobei die Reihenfolge beliebig ist. Bei horizontal und vertikal einsetzbaren Rotationslasern erfolgt im Anschluss an die Überprüfung der ersten und zweiten Horizontalachse eine Überprüfung der Vertikalachse.

Die Ausrichtung der Geräteachsen in einen definierten Zustand erfolgt mittels einer Nivelliereinrichtung des Rotationslasers. Der definierte Zustand des Rotationslasers in Horizontallage wird als horizontaler Zustand und in Vertikallage als vertikaler Zustand bezeichnet. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und bei einem vertikal einsetzbaren Rotationslaser eine dritte Nivelliereinheit, die die Vertikalachse in einen dritten definierten Zustand ausrichtet. Die Nivelliereinheiten umfassen jeweils einen Neigungssensor, der die Neigung der Geräteachse misst, und ein Verstellelement, mit dem die Neigung der Geräteachse verstellbar ist. Im Idealfall sind die Neigungssensoren parallel zu den zugeordneten Geräteachsen ausgerichtet. Ist ein Neigungssensor nicht parallel zur zugeordneten Geräteachse ausgerichtet, weist die Geräteachse einen Neigungsfehler auf.

Die Gerätehersteller von Rotationslasern definieren in den Bedienungsanleitungen ihrer Rotationslaser Verfahren zum Überprüfen der ersten und zweiten Horizontalachse, die vom Bediener regelmäßig durchzuführen sind, und Verfahren zum Kalibrieren der ersten und zweiten Horizontalachse, die vom Bediener durchzuführen sind, wenn die festgelegte Maximaldifferenz für die Horizontalachsen überschritten wird. Die bekannten Verfahren zum Überprüfen der Horizontalachsen basieren auf dem Prinzip einer Umschlagmessung. Die Rotationslaser werden in Horizontallage auf einem stabilen Untergrund oder einem Stativ in einer Messentfernung zu einer Messfläche aufgestellt und die Horizontalachsen des Rotationslasers werden in einen horizontalen Zustand ausgerichtet. Jeder Gerätehersteller definiert die Messentfernung zwischen dem Rotationslaser und der Messfläche und legt eine Maximaldifferenz für die Horizontalachsen fest.

Bei den bekannten Verfahren zum Überprüfen der Horizontalachsen wird der Rotationslaser in einer ersten Winkelposition angeordnet, in der die zu überprüfende Horizontalachse auf die Messfläche ausgerichtet ist, und die Auftreffposition des Laserstrahls auf der Messfläche wird als erster Kontrollpunkt markiert. Der Rotationslaser wird um 180° um die Rotationsachse in eine zweite Winkelposition gedreht, in der die zu überprüfende Horizontalachse in entgegen gerichteter Achsrichtung zur ersten Winkelposition auf die Messfläche ausgerichtet ist, und die Auftreffposition des Laserstrahls auf der Messfläche wird als zweiter Kontrollpunkt markiert. Der Abstand zwischen dem ersten und zweiten Kontrollpunkt auf der Messfläche wird als Differenz bestimmt und mit der vom Gerätehersteller festgelegten Maximaldifferenz für die Horizontalachsen verglichen. Wenn die Differenz grösser als die Maximaldifferenz ist, ist eine Kalibrierung der überprüften Horizontalachse bzw. eine Kalibrierung sämtlicher Geräteachsen des Rotationslasers erforderlich.

Die bekannten Verfahren zum Kalibrieren einer Horizontalachse werden im Anschluss an die Überprüfung der Horizontalachsen durchgeführt, wenn die Differenz zwischen dem ersten und zweiten Kontrollpunkt auf der Messfläche grösser als die Maximaldifferenz ist. Wenn die Position und Ausrichtung des Rotationslasers nicht verändert wurde, kann die Kalibrierung der Horizontalachse mit Hilfe des ersten und zweiten Kontrollpunktes auf der Messfläche vorgenommen werden. Der Rotationslaserwird mittels der Nivelliereinrichtung verstellt, bis die Laserebene in der Mitte zwischen dem ersten und zweiten Kontrollpunkt angeordnet ist. Diese Position der Laserebene wird als neue Nulllage für die Horizontalachse gespeichert. Wurden die Position und/oder die Ausrichtung des Rotationslasers verändert, müssen die Verfahrensschritte zum Überprüfen der Horizontalachse wiederholt werden und die Auftreffpositionen des Laserstrahls auf der Messfläche als neue Kontrollpunkte markiert werden.

Beim Rotationslaser LAR-250 von Stabila werden die erste und zweite Horizontalachse in einem gemeinsamen Verfahren auf Neigungsfehler überprüft. Der Rotationslaser LAR-250 wird in einer Messentfernung von 5 m oder 10 m zur Messfläche aufgestellt. Der Rotationslaser wird nacheinander in vier Winkelpositionen ausgerichtet, die sich um 90° voneinander unterscheiden, und die Auftreffpositionen des Laserstrahls werden als Kontrollpunkte auf der Messfläche markiert. In der ersten Winkelposition ist die erste Horizontalachse auf die Messfläche ausgerichtet und der Laserstrahl erzeugt einen ersten Kontrollpunkt. In der zweiten Winkelposition ist die zweite Horizontalachse auf die Messfläche ausgerichtet und der Laserstrahl erzeugt einen zweiten Kontrollpunkt. In der dritten Winkelposition ist die erste Horizontalachse in entgegen gerichteter Achsrichtung zur ersten Winkelposition auf die Messfläche ausgerichtet und der Laserstrahl erzeugt einen dritten Kontrollpunkt. In der vierten Winkelposition ist die zweite Horizontalachse in entgegen gerichteter Achsrichtung zur zweiten Winkelposition auf die Messfläche ausgerichtet und der Laserstrahl erzeugt einen vierten Kontrollpunkt. Der Abstand zwischen dem ersten und dritten Kontrollpunkt wird als erste Differenz und der Abstand zwischen dem zweiten und vierten Kontrollpunkt wird als zweite Differenz bestimmt. Wenn die erste und/oder zweite Differenz grösser als die Maximaldifferenz ist, sieht die Bedienungsanleitung eine Kalibrierung der ersten und zweiten Horizontalachse vor. Die Maximaldifferenz beträgt 1 mm bei einer Messentfernung von 5 m und 2 mm bei einer Messentfernung von 10 m. Die Kalibrierung der ersten Horizontalachse erfolgt mittels des ersten und dritten Kontrollpunktes und die Kalibrierung der zweiten Horizontalachse erfolgt mittels des zweiten und vierten Kontrollpunktes. Die Laserebene, die der rotierende Laserstrahl aufspannt, wird mittels der ersten Nivelliereinheit verstellt, bis die Laserebene in der Mitte zwischen dem ersten und dritten Kontrollpunkt angeordnet ist, und mittels der zweiten Nivelliereinheit, bis die Laserebene in der Mitte zwischen dem zweiten und vierten Kontrollpunkt angeordnet ist. Diese Positionen der Laserebene werden als neue Nulllagen für die erste und zweite Horizontalachse gespeichert. Dabei entspricht die Mittelposition zwischen dem ersten und dritten Kontrollpunkt einer neuen ersten Nulllage für die erste Horizontalachse und die Mittelposition zwischen dem zweiten und vierten Kontrollpunkt einer neuen zweiten Nulllage für die zweite Horizontalachse.

Beim Rotationslaser TRIAX UL-300 von Sokkia werden die erste und zweite Horizontalachse wie beschrieben in separaten Prüfverfahren auf Neigungsfehler überprüft. Der Rotationslaser wird in einer Messentfernung von 15 m oder 30 m zu einer Messfläche aufgestellt. In einem ersten Prüfverfahren wird die erste Horizontalachse auf einen ersten Neigungsfehler überprüft und ggfs. in einem ersten Kalibrierverfahren kalibriert. In einem zweiten Prüfverfahren wird die zweite Horizontalachse auf einen zweiten Neigungsfehler überprüft und ggfs. in einem zweiten Kalibrierverfahren kalibriert. Nachdem die separaten Prüf- und Kalibrierverfahren für die erste Horizontalachse und die zweite Horizontalachse durchgeführt wurden, werden die erste und zweite Horizontalachse in einer Schlussprüfung der Horizontalachsen verglichen. Dazu werden die beiden Kontrollpunkte des ersten Prüfverfahrens für die erste Horizontalachse und die beiden Kontrollpunkte des zweiten Prüfverfahrens für die zweite Horizontalachse miteinander verglichen und ein maximaler Abstand zwischen den vier Kontrollpunkten bestimmt. Der maximale Abstand zwischen den Kontrollpunkten wird mit einer Maximaldifferenz verglichen. Die Maximaldifferenz beträgt 3 mm bei einer Messentfernung von 15 m und 6 mm bei einer Messentfernung von 30 m. Wenn der maximale Abstand nicht grösser als die Maximaldifferenz ist, liegen die erste und zweite Horizontalachse innerhalb der vorgegebenen Toleranz. Die Bedienungsanleitung des UL300 lässt offen, was der Bediener zu tun hat, wenn der maximale Abstand zwischen den vier Kontrollpunkten grösser als die Maximaldifferenz ist.

Beim Rotationslaser GRL 500 HV von Bosch Power Tools unterscheidet sich das Verfahren zum Kalibrieren der Horizontalachsen von dem beschriebenen Ablauf dadurch, dass die in den Prüfverfahren markierten Kontrollpunkte auf der Messfläche nicht zur Kalibrierung herangezogen werden. Der Rotationslaser wird in einer Messentfernung von 30 m zu einer Messfläche aufgestellt. Die erste und zweite Horizontalachse werden wie beschrieben auf Neigungsfehler überprüft, in dem der Abstand zwischen den beiden Kontrollpunkten mit der Maximaldifferenz verglichen wird. Bosch Power Tools hat für die Horizontalachsen eine Maximaldifferenz von 6 mm festgelegt. Das Verfahren zum Kalibrieren der Horizontalachse umfasst die Schritte: Der Rotationslaser wird in einer ersten Winkelposition angeordnet, in der die zu kalibrierende Horizontalachse auf die Messfläche ausgerichtet ist. Die Auftreffposition des Laserstrahls wird mittels eines Laserempfängers als erste Mittellinie auf die Messfläche übertragen. Der Rotationslaser wird um 180° in eine zweite Winkelposition gedreht, in der die zu kalibrierende Horizontalachse in entgegen gerichteter Achsrichtung auf die Messfläche ausgerichtet ist. Die Auftreffposition des Laserstrahls wird mittels des Laserempfängers als zweite Mittellinie auf die Messfläche übertragen. Die Mittelposition zwischen der ersten Mittellinie und zweiten Mittellinie wird mittels des Laserempfängers ermittelt. Der rotierende Laserstrahl wird mittels der Nivelliereinrichtung des Rotationslasers verstellt, bis der Laserstrahl auf der Mittelposition zwischen der ersten und zweiten Mittellinie angeordnet ist. Die Neigung des Laserstrahls kann mit Hilfe eines Laserempfängers verstellt werden. Dazu wird die Mittenmarkierung des Laserempfängers über der Mittelposition zwischen der ersten und zweiten Mittellinie angeordnet und die Neigung des Laserstrahls in Richtung der Horizontalachse verstellt, bis die Laserebene auf der Mittenmarkierung des Laserempfängers angeordnet ist.

Die bekannten Verfahren zum Verfahren zum Überprüfen und/oder Kalibrieren einer Horizontalachse eines Rotationslasers weisen den Nachteil auf, dass die Auftreffpositionen des Laserstrahls vom Bediener manuell auf die Messfläche übertragen werden und für eine automatische Ausführung ungeeignet sind. Außerdem ist die Genauigkeit des Verfahrens von der Sorgfalt des Bedieners beim Bestimmen des Mittelpunktes des Laserstrahls, beim Übertragen des Mittelpunktes auf die Messfläche und beim Bestimmen des Abstandes zwischen den Kontrollpunkten abhängig. Nachteilig ist außerdem, dass die Messentfernung zwischen dem Rotationslaser und der Messfläche bei der Ausführung der Verfahren fest vorgegeben ist. Die für die Rotationslaser GRL 500 HV von Bosch Power Tools festgelegte Messentfernung von 30 m ist bei Messaufgaben im Innenbereich häufig nicht vorhanden.

Aus EP 2 781 880 A1 sind ein Verfahren zum Überprüfen einer Horizontalebene eines Rotationslasers und ein Verfahren zum Kalibrieren der Horizontalebene des Rotationslasers bekannt. Das Verfahren unterscheidet sich von den beschriebenen Abläufen dadurch, dass die Überprüfung der Horizontalebene des Rotationslasers nicht durch eine Überprüfung der ersten und zweiten Horizontalachse erfolgt, sondern in drei oder mehr als drei beliebigen Winkelpositionen erfolgt. Für die Winkelpositionen des Rotationslasers können beliebige Ausrichtungen gewählt werden. Die ausgewählten Winkelpositionen werden anhand einer Richtungsbestimmungsfunktionalität im Rahmen der jeweiligen Verfahrensschritte mitbestimmt. Beim Verfahren zum Überprüfen der Horizontalebene wird der Rotationslaser manuell durch den Bediener oder automatisch mit Hilfe einer motorisierten Drehplattform in die mindestens drei Winkelpositionen angeordnet und die jeweilige Auftreffposition des nivellierten Laserstrahls auf ein Detektionsfeld eines Laserempfängers gespeichert. EP 2 781 880 A1 macht keinerlei Angaben dazu, wie die Kalibrierung der Horizontalebene des Rotationslasers erfolgt. Es heißt lediglich, dass bei Nichterfüllen oder Schlechterfüllen der Anforderungen die für die Strahlhorizontierfunktionalität gespeicherten Kalibrierdaten automatisch durch die Steuer- und Auswerteeinrichtung upgedatet werden.

### Darstellung der Erfindung

Die Aufgabe der vorliegenden Erfindung besteht in der Entwicklung eines Verfahrens zum Überprüfen und/oder Kalibrieren einer Horizontalachse eines Rotationslasers, das an die Umgebungsbedingungen der Messumgebung angepasst werden kann. Außerdem soll das Verfahren für eine weitgehend automatische Ausführung geeignet sein.

Diese Aufgabe wird bei dem eingangs genannten Verfahren zum Überprüfen und/oder Kalibrieren einer Horizontalachse eines Rotationslasers erfindungsgemäß durch die Merkmale des unabhängigen Anspruchs 1 gelöst. Vorteilhafte Weiterbildungen sind in den abhängigen Ansprüchen angegeben.

Das Verfahren zum Überprüfen und/oder Kalibrieren einer ersten oder zweiten Horizontalachse eines Rotationslasers, der einen um eine Rotationsachse rotierbaren Laserstrahl aussendet, weist erfindungsgemäß die Schritte auf:
▪ der Rotationslaser wird in einer Messentfernung D_{H} zu einem Laserempfänger positioniert, wobei der Rotationslaser in Horizontallage und der Laserempfänger in Längsanordnung ausgerichtet werden,
▪ die erste und zweite Horizontalachse des Rotationslasers werden in einen horizontalen Zustand ausgerichtet, wobei der horizontale Zustand der ersten Horizontalachse durch eine erste Nulllage und der zweiten Horizontalachse durch eine zweite Nulllage festgelegt ist,
▪ der Rotationslaser wird in einer ersten Winkelposition angeordnet, wobei die zu überprüfende Horizontalachse in der ersten Winkelposition auf ein Detektionsfeld des Laserempfängers ausgerichtet wird,
▪ die Auftreffposition des Laserstrahls auf dem Detektionsfeld des Laserempfängers wird als erster Kontrollpunkt bestimmt und der Abstand des ersten Kontrollpunktes zu einer Nullposition des Detektionsfeldes als erster Höhenversatz H₁ gespeichert,
▪ der Rotationslaser wird in einer zweiten Winkelposition angeordnet, wobei die zweite Winkelposition zur ersten Winkelposition um 180° um die Rotationsachse gedreht ist,
▪ die Auftreffposition des Laserstrahls auf dem Detektionsfeld des Laserempfängers wird als zweiter Kontrollpunkt bestimmt und der Abstand des zweiten Kontrollpunktes zur Nullposition des Detektionsfeldes als zweiter Höhenversatz H₂ gespeichert,
▪ der Abstand zwischen dem ersten Kontrollpunkt und zweiten Kontrollpunkt wird als Differenz Δ aus dem ersten und zweiten Höhenversatz berechnet,
▪ die Messentfernung D_{H} zwischen dem Rotationslaser und dem Laserempfänger wird bestimmt und
▪ die Differenz Δ wird mit einer Maximaldifferenz Δₘₐₓ verglichen.

Beim erfindungsgemäßen Verfahren zum Überprüfen und/oder Kalibrieren einer Horizontalachse wird die Messentfernung zwischen dem Rotationslaser und dem Laserempfänger gemessen und ist nicht auf eine vorgegebene Messentfernung festgelegt. Dies hat den Vorteil, dass die Messentfernung an die Umgebungsbedingungen der Messumgebung angepasst werden kann. Der Verfahrensschritt, in dem die Messentfernung zwischen dem Rotationslaser und dem Laserempfänger bestimmt wird, kann an unterschiedlichen Stellen im erfindungsgemäßen Verfahren ausgeführt werden. Die Auftreffpositionen des Laserstrahls werden beim erfindungsgemäßen Verfahren mit einem Laserempfänger bestimmt und als Höhenversatz zur Nullposition des Detektionsfeldes gespeichert. Durch die Verwendung eines Laserempfängers mit Messfunktion wird die Messgenauigkeit bei der Ausführung des Verfahrens erhöht. Der Laserempfänger bestimmt die Auftreffposition des Laserstrahls auf dem Detektionsfeld nach einer festen Routine. Dies hat den Vorteil, dass die Genauigkeit des Verfahrens unabhängig von der Sorgfalt des Bedieners ist und sich für eine automatisierte Ausführung des Verfahrens eignet. Wenn der Rotationslaser auf einer motorisierten Drehplattform angeordnet wird, kann das erfindungsgemäße Verfahren vollautomatisch ausgeführt werden. Bei einer halbautomatischen Ausführung führt der Bediener die Anordnung des Rotationslasers in die erste und zweite Winkelposition auf Anforderung manuell durch, alle anderen Verfahrensschritte werden vom Rotationslaser und Laserempfänger ausgeführt.

Bevorzugt wird die Messentfernung zwischen dem Rotationslaser und dem Laserempfänger mittels des rotierbaren Laserstrahls und des Laserempfängers bestimmt. Das erfindungsgemäße Verfahren hat den Vorteil, dass die Umgebungsbedingungen der Messumgebung beim Überprüfen und/oder Kalibrieren der Horizontalachse berücksichtigt werden können und außerdem keine zusätzlichen Gerätekomponenten erforderlich sind. Die Messentfernung zwischen dem Rotationslaser und dem Laserempfänger wird so gewählt, wie es die Messumgebung zulässt.

Besonders bevorzugt wird die Messentfernung zwischen dem Rotationslaser und dem Laserempfänger als erste Distanz mittels eines ersten Messverfahrens, als zweite Distanz mittels eines zweiten Messverfahrens oder als gemittelte Distanz aus der ersten und zweiten Distanz bestimmt. Wenn die Messentfernung zwischen dem Rotationslaser und dem Laserempfänger mittels verschiedener Messverfahren bestimmt werden kann, kann das Verfahren zum Überprüfen und/oder Kalibrieren einer Horizontalachse an die Umgebungsbedingungen der Messumgebung und die Funktionen der Messgeräte (Rotationslaser und Laserempfänger) angepasst werden.

In einer ersten bevorzugten Ausführung wird die Messentfernung zwischen dem Rotationslaser und dem Laserempfänger als erste Distanz mittels des ersten Messverfahrens bestimmt. Beim ersten Messverfahren wird der Laserstrahl um einen Neigungswinkel geneigt und der Abstand des geneigten Laserstrahls zur Nullposition des Detektionsfeldes wird gespeichert. Das erste Messverfahren ist für Laserempfänger mit einer Messfunktion geeignet, die den Abstand eines Laserstrahls zu einer Nullposition als Höhenversatz messen können. Die Messung der ersten Distanz kann beim erfindungsgemäßen Verfahren in der ersten Winkelposition oder der zweiten Winkelposition erfolgen. Die Neigung des Laserstrahls um den Neigungswinkel kann mittels der Nivelliereinrichtung des Rotationslasers durchgeführt werden. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet. Wenn die erste Horizontalachse überprüft oder kalibriert wird, ist die erste Horizontalachse auf das Detektionsfeld des Laserempfängers ausgerichtet und der Laserstrahl wird mittels der ersten Nivelliereinheit um die zweite Horizontalachse geneigt, wobei die Einstellung des Neigungswinkels mit Hilfe eines ersten Verstellelementes und eines ersten Neigungssensors der ersten Nivelliereinheit erfolgt. Wenn die zweite Horizontalachse überprüft oder kalibriert wird, ist die zweite Horizontalachse auf das Detektionsfeld des Laserempfängers ausgerichtet und der Laserstrahl wird mittels der zweiten Nivelliereinheit um die erste Horizontalachse geneigt, wobei die Einstellung des Neigungswinkels mit Hilfe eines zweiten Verstellelementes und eines zweiten Neigungssensors der zweiten Nivelliereinheit erfolgt.

In einer ersten Variante des ersten Messverfahrens wird der Rotationslaser horizontal ausgerichtet, der horizontal ausgerichtete Laserstrahl wird auf die Nullposition des Detektionsfeldes eingestellt, der Laserstrahl wird in Richtung des Laserempfängers um einen Neigungswinkel α geneigt, die Auftreffposition des geneigten Laserstrahls auf dem Detektionsfeld des Laserempfängers wird als erster Messpunkt bestimmt, der Abstand des ersten Messpunktes zur Nullposition des Detektionsfeldes wird als erste Höhe h₁ = h(α) gespeichert und die erste Distanz d₁ wird aus dem Neigungswinkel α und einer Höhendifferenz Δh zwischen der ersten Höhe h₁ und der Nullposition des Detektionsfeldes berechnet. Wenn die Längsrichtung des Laserempfängers parallel zur Lotrichtung ausgerichtet ist, kann die erste Distanz d₁ gemäß der Formel tan(α) = Δh/d₁ berechnet werden. Für kleine Neigungswinkel α gilt näherungsweise tan(α) ≈ sin(α). Die erste Variante des ersten Messverfahrens ist besonders für Rotationslaser und Laserempfänger mit Auto-Alignment-Funktion geeignet, bei denen die Höheneinstellung des Laserstrahls auf die Nullposition des Detektionsfeldes des Laserempfängers automatisch durchgeführt werden kann.

In einer zweiten Variante des ersten Messverfahrens wird der Rotationslaser horizontal ausgerichtet, die Auftreffposition des horizontal ausgerichteten Laserstrahls auf dem Detektionsfeld des Laserempfängers wird als Referenzpunkt bestimmt, der Abstand des Referenzpunktes zur Nullposition des Detektionsfeldes wird als Referenzhöhe h₀= h(0°) gespeichert, der Laserstrahl wird um einen Neigungswinkel α geneigt, die Auftreffposition des geneigten Laserstrahls auf dem Detektionsfeld wird als erster Messpunkt bestimmt, der Abstand des ersten Messpunktes zur Nullposition des Detektionsfeldes wird als erste Höhe h₁ = h(α) gespeichert und die erste Distanz d₁ wird aus dem Neigungswinkel α und einer Höhendifferenz Δh zwischen der ersten Höhe und der Referenzhöhe berechnet. Wenn die Längsrichtung des Laserempfängers parallel zur Lotrichtung ausgerichtet ist, kann die erste Distanz d₁ gemäß der Formel tan(α) = (h₁ - h₀)/d₁ = Δh/d₁ berechnet werden. Für kleine Neigungswinkel α gilt näherungsweise tan(α) ≈ sin(α). Die zweite Variante des ersten Messverfahrens ist für Rotationslaser und Laserempfänger ohne Auto-Alignment-Funktion geeignet. Der Bediener muss lediglich sicherstellen, dass der um den Neigungswinkel α geneigte Laserstrahl vom Detektionsfeld des Laserempfängers erfasst wird. Bei einem Rotationslaser und Laserempfänger mit Auto-Alignment-Funktion wird der Laserstrahl automatisiert in den Bereich des Detektionsfeldes verfahren.

In einer dritten Variante des ersten Messverfahrens wird der Rotationslaser horizontal ausgerichtet, der horizontal ausgerichtete Laserstrahl wird in einer Neigungsrichtung um einen Neigungswinkel α geneigt, die Auftreffposition des geneigten Laserstrahls auf dem Detektionsfeld des Laserempfängers wird als erster Messpunkt bestimmt, der Abstand des ersten Messpunktes zur Nullposition des Detektionsfeldes wird als erste Höhe h₁ = h(α) gespeichert, der Laserstrahl wird in einer entgegen gerichteten Neigungsrichtung um einen negativen Neigungswinkel -α geneigt, die Auftreffposition des geneigten Laserstrahls auf dem Detektionsfeld wird als zweiter Messpunkt bestimmt, der Abstand des zweiten Messpunktes zur Nullposition des Detektionsfeldes wird als zweite Höhe h₂ = h(-α) gespeichert und die erste Distanz d₁ wird aus dem Neigungswinkel α und einer Höhendifferenz Δh zwischen der ersten Höhe und zweiten Höhe berechnet. Wenn die Längsrichtung des Laserempfängers parallel zur Lotrichtung ausgerichtet ist, kann die erste Distanz d₁ gemäß der Formel tan(2α) = (h(α) - h(-α))/d₁ = Δh/d₁ berechnet werden. Für kleine Neigungswinkel α gilt näherungsweise tan(2α) ≈ sin(2a). Die dritte Variante des ersten Messverfahrens ist für Rotationslaser und Laserempfänger mit und ohne Auto-Alignment-Funktion geeignet. Wenn der horizontal ausgerichtete Laserstrahl zunächst auf die Nullposition des Detektionsfeldes oder zumindest in die Nähe der Nullposition ausgerichtet wird, kann die gesamte Detektionshöhe des Detektionsfeldes genutzt werden. Bei einem Gerätesystem mit Auto-Alignment-Funktion kann die Höheneinstellung auf die Nullposition automatisiert durchgeführt werden.

In einer zweiten bevorzugten Ausführung wird die Messentfernung zwischen dem Rotationslaser und dem Laserempfänger als zweite Distanz mittels des zweiten Messverfahrens bestimmt. Beim zweiten Messverfahren wird der Rotationslaser horizontal ausgerichtet, der horizontal ausgerichtete Laserstrahl wird mit einer Rotationsgeschwindigkeit v_{R} um die Rotationsachse rotiert, die Signallänge tₛ des rotierenden Laserstrahls auf dem Detektionsfeld des Laserempfängers wird bestimmt und die zweite Distanz d₂ wird aus der Rotationsgeschwindigkeit v_{R}, der Signallänge tₛ und der Detektionsbreite B_{D} des Detektionsfeldes berechnet. Wenn die Längsrichtung des Laserempfängers parallel zur Lotrichtung ausgerichtet ist, kann die zweite Distanz d₂ gemäß der Formel tₛ / t_{full} = B_{D} / (2πd₂) mit t_{full} = 60/v_{R} berechnet werden. Die Rotationsgeschwindigkeit v_{R} wird in Umdrehungen pro Minute angegeben und die für eine Umdrehung erforderliche Zeit t_{full} beträgt 60/v_{R}. Das zweite Messverfahren ist für Rotationslaser und Laserempfänger ohne Auto-Alignment-Funktion geeignet. Der Laserempfänger muss die Signallänge tₛ des rotierenden Laserstrahls auf dem Detektionsfeld messen können.

In einer dritten bevorzugten Ausführung wird die Messentfernung zwischen dem Rotationslaser und dem Laserempfänger als gemittelte Distanz aus der ersten und zweiten Distanz bestimmt. Durch die Mittelung aus der ersten und zweiten Distanz kann die Genauigkeit, mit der die Messentfernung zwischen dem Rotationslaser und dem Laserempfänger bestimmt werden kann, erhöht werden. Die erste Distanz, die mittels des ersten Messverfahrens bestimmt wird, ist grösser oder gleich der tatsächlichen Messentfernung. Wenn die Längsrichtung des Laserempfängers nicht parallel zur Lotrichtung ausgerichtet ist, sondern gegenüber der Lotrichtung geneigt ist, ist der vertikale Abstand in Lotrichtung kleiner als der Abstand, den das Detektionsfeld des Laserempfängers gemessen hat. Die zweite Distanz, die mittels des zweiten Messverfahrens bestimmt wird, ist kleiner oder gleich der tatsächlichen Messentfernung. Wenn die Längsrichtung des Laserempfängers nicht parallel zur Lotrichtung ausgerichtet ist, sondern gegenüber der Lotrichtung geneigt ist, ist der horizontale Abstand senkrecht zur Lotrichtung, den der rotierende Laserstrahl auf dem Detektionsfeld überstreift, grösser als die Detektionsbreite B_{D} des Detektionsfeldes.

In einer bevorzugten Weiterentwicklung des Verfahrens wird eine Neigung des Laserempfängers relativ zu einer Lotrichtung als erster Vertikalwinkel φ₁ in einer ersten Vertikalebene und/oder als zweiter Vertikalwinkel φ₂ in einer zweiten Vertikalebene ermittelt, wobei die erste Vertikalebene von der Lotrichtung und einem Normalenvektor des Detektionsfeldes des Laserempfängers und die zweite Vertikalebene von einer Längsrichtung und einer Querrichtung des Detektionsfeldes aufgespannt wird. Der erste Vertikalwinkel φ₁ wird zwischen dem Normalenvektor des Detektionsfeldes und der Lotrichtung gemessen, wobei der erste Vertikalwinkel φ₁ die Abweichung von 90° zwischen dem Normalenvektor und der Lotrichtung darstellt, und der zweite Vertikalwinkel φ₂ wird zwischen der Lotrichtung und der Längsrichtung des Detektionsfeldes gemessen. Bei der Ausführung des erfindungsgemäßen Verfahrens ist der Laserempfänger in Längsanordnung ausgerichtet, wobei die Längsrichtung des Detektionsfeldes parallel zur Lotrichtung und die Querrichtung des Detektionsfeldes senkrecht zur Lotrichtung verlaufen sollten. Durch eine Neigung des Laserempfängers relativ zur Lotrichtung weichen die horizontalen und vertikalen Abstände von den Abständen, die das Detektionsfeld des Laserempfängers gemessen hat, ab. Wenn die Neigung des Laserempfängers bekannt ist, können die Größen entsprechend korrigiert werden. Der Laserempfänger kann relativ zur Lotrichtung um den ersten und/oder zweiten Vertikalwinkel geneigt sein. Die Neigung des Laserempfängers kann mittels eines 2-Achsen-Beschleunigungssensors oder mittels zwei 1-Achs-Beschleunigungssensoren gemessen werden.

Besonders bevorzugt wird bei der Auswertung mit dem Laserempfänger für den ersten Vertikalwinkel φ₁ und/oder den zweiten Vertikalwinkel φ₂ ein winkelabhängiger Korrekturfaktor cos(φ₁), cos(φ₂), 1/cos(φ₂) multipliziert. Durch die Multiplikation mit einem winkelabhängigen Korrekturfaktor oder mit mehreren winkelabhängigen Korrekturfaktoren kann die Neigung des Laserempfängers um den ersten Vertikalwinkel φ₁ und/oder den zweiten Vertikalwinkel φ₂ kompensiert werden. In den Formeln, die die Messfunktion des Laserempfängers nutzen und Abstände auf dem Detektionsfeld in Längsrichtung messen, werden die Abstände mit einem Korrekturfaktor cos(φ₁) für den ersten Vertikalwinkel φ₁ und einem Korrekturfaktor cos(φ₂) für den zweiten Vertikalwinkel φ₂ multipliziert. Der Korrekturfaktor cos(φ₁) · cos(φ₂) ist bei der Distanzmessung der Messentfernung mittels des ersten Messverfahrens, bei der Bestimmung der Differenz zwischen dem ersten und zweiten Kontrollpunkt und der Berechnung des Korrekturwinkels im Rahmen des erfindungsgemäßen Verfahrens zu berücksichtigen. Bei der Distanzmessung der Messentfernung D_{H} als zweite Distanz mittels des zweiten Messverfahrens wird nicht die übliche Messfunktion des Laserempfängers in Längsrichtung genutzt, sondern die Detektionsbreite in Querrichtung. Durch die Neigung des Laserempfängers in der zweiten Vertikalebene um den zweiten Vertikalwinkel φ₂ ist der horizontale Abstand, den der rotierende Laserstrahl auf dem Detektionsfeld überstreift, grösser als die Detektionsbreite B_{D} des Detektionsfeldes. Die Signallänge des rotierenden Laserstrahls entspricht dem horizontalen Abstand auf dem Detektionsfeld. Für den horizontalen Abstand gilt der Zusammenhang B_{D}/cos(φ₂). Eine Neigung des Laserempfängers um den ersten Vertikalwinkel φ₁ verändert den horizontalen Abstand nicht. Der winkelabhängige Korrekturfaktor 1/cos(φ₂) wird bei der der Distanzmessung mittels des zweiten Messverfahrens berücksichtigt.

In einer bevorzugten Weiterentwicklung des Verfahrens werden für die Ausrichtung der zu überprüfenden Horizontalachse in den horizontalen Zustand mehrere Nulllagen in Abhängigkeit von einer Temperatur oder einer von der Temperatur abhängigen Messgröße aufgenommen und in einer Kennlinie gespeichert. Dabei umfasst der Begriff "Kennlinie" sowohl eine kontinuierliche Kennlinie als auch eine Tabelle mit diskreten Wertepaaren von Nulllage und Temperatur oder von Nulllage und temperaturabhängiger Messgröße. Die gespeicherte Kennlinie stellt für die zu überprüfende Horizontalachse des Rotationslasers einen Zusammenhang zwischen der Temperatur bzw. der temperaturabhängigen Messgröße und der Nulllage des Neigungssensors dar. Als Nulllage ist der Neigungswinkel definiert, der dem definierten Zustand der Horizontalachse entspricht. Aus der Kennlinie kann für jede Temperatur aus dem zugelassenen Betriebstemperaturbereich eine Nulllage abgelesen werden.

Bevorzugt wird die Temperatur oder die von der Temperatur abhängige Messgröße des Rotationslasers gemessen, die zur Temperatur oder Messgröße zugehörige Nulllage wird aus der Kennlinie ermittelt und die Horizontalachse wird in den durch die Nulllage definierten horizontalen Zustand ausgerichtet. Durch die Temperaturmessung kann die Genauigkeit des Rotationslasers erhöht werden, da der Einfluss der Temperatur auf die Genauigkeit des Rotationslasers reduziert wird.

Besonders bevorzugt wird die Temperatur des Rotationslasers mittels eines Neigungssensors, der ein Gehäuse, das mit einer Flüssigkeit und einer Gasblase gefüllt ist, eine Lichtquelle und mindestens einen Fotodetektor umfasst, gemessen. Die Messung der Temperatur des Rotationslasers mittels des Neigungssensors der Nivelliereinheit hat den Vorteil, dass die Temperatur genau an dem Ort im Gerätegehäuse des Rotationslasers gemessen wird, der für die Ausrichtung der Horizontalachse relevant ist. Außerdem ist kein weiteres Sensorelement für die Temperaturmessung erforderlich, so dass der apparative Aufwand für die Temperaturmessung reduziert ist.

Besonders bevorzugt wird eine weitere Kennlinie von Temperaturen und Blasenlängen der Gasblase gespeichert, die Blasenlänge der Gasblase wird mittels der Lichtquelle und des Fotodetektors des Neigungssensors gemessen und die zur gemessenen Blasenlänge zugehörige Temperatur wird anhand der weiteren Kennlinie ermittelt. Die Gasblase des Neigungssensors weist eine Blasenlänge auf, die temperaturabhängig ist und sich daher als Messgröße für die Temperatur eignet. Die Blasenlänge kann mit Hilfe der Lichtquelle und des Fotodetektors des Neigungssensors gemessen werden. Für die Temperaturmessung ist kein weiteres Sensorelement erforderlich, die Temperaturmessung erfolgt ausschließlich mit Hilfe der Komponenten des Neigungssensors.

Bevorzugt wird aus der Messentfernung D_{H}, dem ersten Höhenversatz H₁ und dem zweiten Höhenversatz H₂ ein Korrekturwinkel θ berechnet und der Korrekturwinkel θ wird als neue Nulllage für die Ausrichtung der Horizontalachse in den horizontalen Zustand gespeichert, wenn die Differenz Δ grösser als die Maximaldifferenz Δₘₐₓ ist. Die Messentfernung D_{H} zwischen dem Rotationslaser und dem Laserempfänger wurde als erste Distanz, als zweite Distanz oder als gemittelte Distanz bestimmt und wird für die Kalibrierung der Horizontalachse benötigt. Wenn die Differenz Δ zwischen dem ersten und zweiten Kontrollpunkt grösser als die vom Gerätehersteller definierte Maximaldifferenz Δₘₐₓ ist, erfüllt der Rotationslaser die angegebene Gerätegenauigkeit nicht und die Horizontalachse muss kalibriert werden. Der Korrekturwinkel θ kann gemäß der Formel tan(θ) = (H₁ - H₂)/2D_{H} berechnet werden.

Besonders bevorzugt wird die kalibrierte Horizontalachse in einer weiteren Prüfschleife überprüft, wobei der horizontale Zustand der Horizontalachse durch die neue Nulllage definiert ist. Die Horizontalachsen werden in den horizontalen Zustand ausgerichtet und das Verfahren zum Überprüfen der Horizontalachse wird durchgeführt. Der Abstand zwischen dem ersten Kontrollpunkt, der in der ersten Winkelposition bestimmt wird, und dem zweiten Kontrollpunkt, der in der zweiten Winkelposition bestimmt wird, wird als Differenz Δ berechnet und mit der Maximaldifferenz Δₘₐₓ verglichen. Wenn die Differenz Δ kleiner als die Maximaldifferenz Δₘₐₓ ist, erfüllt der Rotationslaser die angegebene Gerätegenauigkeit. Für den Fall, dass die Differenz Δ grösser als die Maximaldifferenz Δₘₐₓ ist oder gleich der Maximaldifferenz Δₘₐₓ ist, ist eine Justierung des Rotationslasers erforderlich.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Vorrichtung mit einem Rotationslaser in Horizontallage und einem Laserempfänger in Längsanordnung;
- FIGN. 2A-C: den Rotationslaser der FIG. 1 in einer dreidimensionalen Darstellung (FIG. 2A) und die wesentlichen Komponenten des Rotationslasers in einer schematischen Darstellung in einer Vertikalebene (FIG. 2B) und einer Horizontalebene (FIG. 2C);
- FIGN. 3A, B: den Laserempfänger der FIG. 1 in einer dreidimensionalen Darstellung (FIG. 3A) und die wesentlichen Komponenten des Laserempfängers und des Rotationslasers in einer schematischen Darstellung (FIG. 3B);
- FIGN. 4A-C: den Rotationslaser und den Laserempfänger der FIG. 1 bei der Ausführung des erfindungsgemäßen Verfahrens zum Überprüfen und Kalibrieren einer Horizontalachse des Rotationslasers;
- FIGN. 5A-C: drei Varianten eines ersten Messverfahrens zum Messen einer ersten Distanz zwischen dem Rotationslaser und dem Laserempfänger mittels eines geneigten Laserstrahls;
- FIGN. 6A, B: den Laserempfänger, der zu einer Lotrichtung um einen ersten Vertikalwinkel (FIG. 6A) und einen zweiten Vertikalwinkel (FIG. 6B) geneigt ist, in einer schematischen Darstellung; und
- FIGN. 7A-C: den Aufbau eines optischen Neigungssensors mit einer Gasblase (FIG. 7A), eine Kennlinie, die eine Nulllage des Neigungssensors abhängig von einer Temperatur darstellt (FIG. 7B), und eine weitere Kennlinie, die die Temperatur abhängig von einer Blasenlänge der Gasblase darstellt (FIG. 7C).

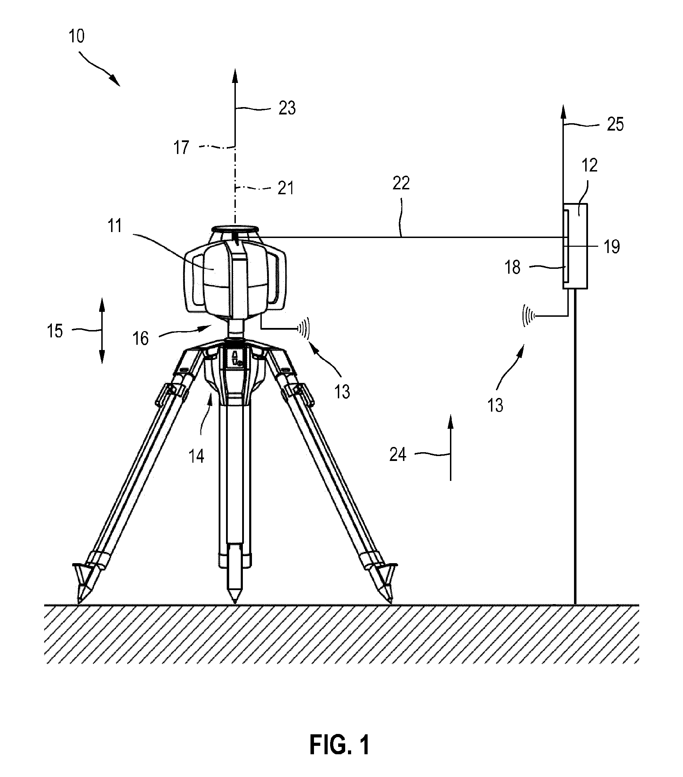

**FIG. 1** zeigt eine Vorrichtung **10** mit einem Rotationslaser **11** und einem Laserempfänger **12,** die über eine drahtlose Kommunikationsverbindung **13** verbindbar sind. Der Rotationslaser 11 ist in Horizontallage angeordnet, die für horizontale Anwendungen des Rotationslasers vorgesehen ist. Der Rotationslaser 11 ist auf einem motorisierten Stativ **14** angeordnet, das eine automatische Höheneinstellung des Rotationslasers 11 in einer Höhenrichtung **15** ermöglicht. Zusätzlich kann eine Drehplattform **16** vorgesehen sein, die eine automatische Winkeleinstellung des Rotationslasers 11 um eine Drehachse **17** der Drehplattform 16 ermöglicht. Die Drehplattform 16 kann in das Stativ 14 oder den Rotationslaser 11 integriert sein oder als separate Komponente, die auf dem Stativ 14 angeordnet wird, ausgebildet sein. Der Laserempfänger 12 ist mit einer Messfunktion ausgestattet, die eine Auftreffposition eines Laserstrahls auf ein Detektionsfeld **18** des Laserempfängers 12 ermittelt und den Abstand des Laserstrahls zu einer Nullposition **19** des Detektionsfeldes 18 darstellt.

Der Rotationslaser 11 ist als horizontal und vertikal einsetzbarer Rotationslaser ausgebildet, der einen um eine Rotationsachse **21** des Rotationslasers 11 rotierenden ersten Laserstrahl **22** und einen ruhenden zweiten Laserstrahl **23** aufweist. Der rotierende erste Laserstrahl 22 erzeugt eine Laserebene, die senkrecht zur Rotationsachse 21 angeordnet ist, und der zweite Laserstrahl 23 verläuft senkrecht zur Laserebene des ersten Laserstrahls 22. Bei der in FIG. 1 dargestellten Horizontallage des Rotationslasers 11 wird der erste Laserstrahl 22 verwendet und auf das Detektionsfeld 18 des Laserempfängers 12 ausgerichtet, wobei der Laserempfänger 12 in einer Längsanordnung ausgerichtet ist.

Die Ausrichtung des Laserempfängers 12 ist mittels des Detektionsfeldes 18 und einer Lotrichtung **24** definiert. Das Detektionsfeld 18 des Laserempfängers 12, mit dem die Auftreffposition des ersten oder zweiten Laserstrahls 22, 23 erfasst wird, weist in einer Längsrichtung **25** eine Detektionshöhe **H_{D}** und in einer Querrichtung **26** eine Detektionsbreite **B_{D}** auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zu einer Oberseite des Detektionsfeldes 18 verlaufen. Als Längsanordnung wird die Ausrichtung des Laserempfängers 12 bezeichnet, in der die Längsrichtung 25 des Detektionsfeldes 18 parallel zur Lotrichtung 24 ausgerichtet ist, und als Queranordnung die Ausrichtung des Laserempfängers 12, in der die Querrichtung 26 des Detektionsfeldes 18 parallel zur Lotrichtung 24 ausgerichtet ist.

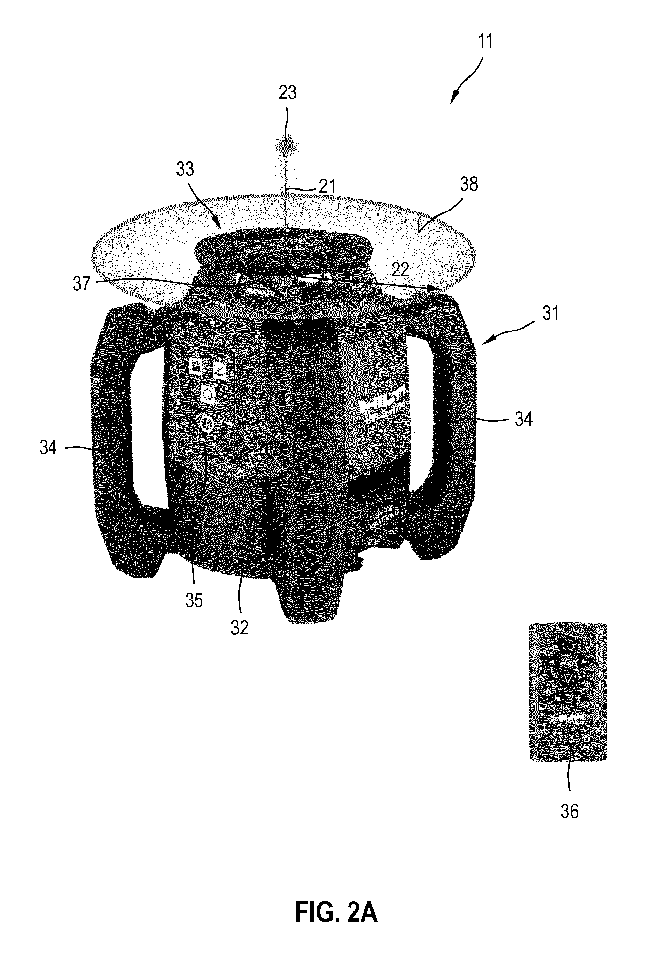

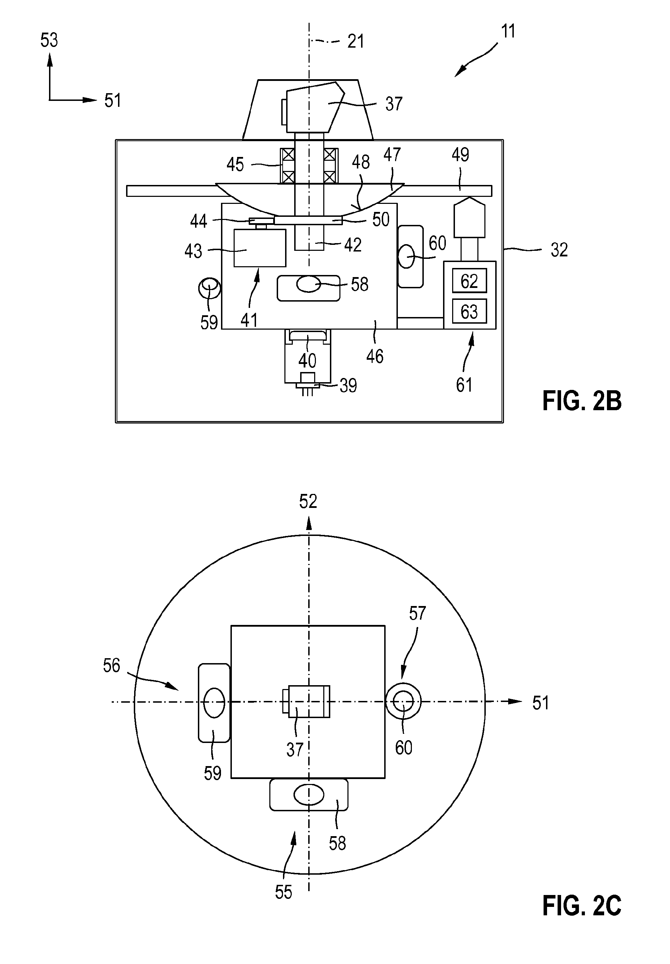

**FIGN. 2A-C** zeigen den Rotationslaser 11 in einer dreidimensionalen Darstellung (FIG. 2A) und die wesentlichen Komponenten des Rotationslasers 11 in einer schematischen Darstellung, wobei FIG. 2B die Komponenten in einer Vertikalebene parallel zur Rotationsachse 21 und FIG. 2C die Komponenten in einer Horizontalebene senkrecht zur Rotationsachse 21 darstellt.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 21 rotierende Umlenkoptik **37** trifft. Ein erster Teil des Laserstrahls wird von der Umlenkoptik 37 um 90° umgelenkt und bildet den ersten Laserstrahl 22 des Rotationslasers 11, der eine Laserebene **38** aufspannt. Ein zweiter Teil des Laserstrahls tritt durch die Umlenkoptik 37 hindurch und bildet den zweiten Laserstrahl 23 des Rotationslasers 11. Abhängig von der Rotationsgeschwindigkeit, mit der der erste Laserstrahl 22 um die Rotationsachse 21 rotiert wird, werden ein Rotationsmodus, ein Linienmodus und ein Punktmodus des Rotationslasers 11 unterschieden.

FIGN. 2B, C zeigen die wesentlichen Komponenten des Rotationslasers 11 in einer schematischen Darstellung. Der Rotationslaser 11 umfasst eine Lasereinrichtung mit einer Strahlquelle **39,** die einen Laserstrahl erzeugt, und einer Kollimationsoptik **40.** Die Strahlquelle 39 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 39 wird der Laserstrahl mit Hilfe der Kollimationsoptik 40 kollimiert. Alternativ kann die Kollimationsoptik in die Strahlquelle integriert sein oder bei einer Strahlquelle 39 mit einer hohen Strahlqualität und geringen Divergenz kann die Kollimationsoptik entfallen.

Der kollimierte Laserstrahl trifft auf die Umlenkoptik 37, die den ersten und zweiten Laserstrahl 22, 23 trennt. Die Umlenkoptik 37 ist mit einer Dreheinrichtung **41** verbunden, die die Umlenkoptik 37 um die Rotationsachse 21 bewegt. Die Dreheinrichtung 41 umfasst eine drehbare Welle **42,** eine Motoreinheit **43** und eine Übertragungseinrichtung **44,** die beispielsweise in Form eines Zahnriemens ausgebildet ist und die Bewegung der Motoreinheit 43 auf die Welle 42 überträgt. Die Umlenkoptik 37 ist mit der drehbaren Welle 42 gekoppelt und um die Rotationsachse 21 drehbar ausgebildet. Die Welle 42 ist in einem Drehlager **45** eines Statorteils **46** gelagert, das mit einer Kugelkalotte **47** verbunden ist. Die Kugelkalotte 47 ist in einer Kugelkalottenlagerung **48** in einem gehäusefesten Montagerahmen **49** um zwei zur Rotationsebene (Ebene senkrecht zur Rotationsachse 21) senkrechte Schwenkebenen neigbar gelagert. Der Rotationslaser 11 umfasst eine Messeinrichtung **50,** die den Drehwinkel der Welle 42 während der Rotation um die Rotationsachse 21 misst. Die Messeinrichtung 50 ist beispielsweise als Winkelencoder ausgebildet und besteht aus einer Maßscheibe, die mit der Welle 42 drehfest verbunden ist, einer Abtasteinrichtung, mit der die Maßscheibe abgetastet wird, und einem Auswerte- und Steuerelement.

Der Rotationslaser 11 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 11 weist als Geräteachsen eine erste Horizontalachse **51** und eine zweite Horizontalachse **52** auf, die senkrecht zueinander verlaufen und eine Geräteebene aufspannen. Die erste und zweite Horizontalachse 51, 52 werden am Rotationskopf 33 des Rotationslasers 11 über Anzeigeelemente angezeigt. Der horizontal und vertikal einsetzbare Rotationslaser 11 weist neben der ersten und zweiten Horizontalachse 51, 52 eine weitere Geräteachse auf, die als Vertikalachse **53** bezeichnet wird und im Idealfall senkrecht zur Geräteebene der ersten und zweiten Horizontalachse 51, 52 ausgerichtet ist.

Der Rotationslaser 11 ist als selbstnivellierender Rotationslaser ausgebildet, der sich automatisch nivelliert, wenn das Gerätegehäuse 31 des Rotationslasers 11 innerhalb eines Selbstnivellierbereiches aufgestellt wird. Der Selbstnivellierbereich von Rotationslasern liegt typischerweise bei 5°. Der Rotationslaser 11 umfasst eine Nivelliereinrichtung, die die Geräteachsen des Rotationslasers 11 unabhängig von einer Ausrichtung des Gerätegehäuses 31 in einen definierten Zustand ausrichtet. Die Nivelliereinrichtung umfasst eine erste Nivelliereinheit **55,** die die erste Horizontalachse 51 in einen ersten definierten Zustand ausrichtet, eine zweite Nivelliereinheit **56,** die die zweite Horizontalachse 52 in einen zweiten definierten Zustand ausrichtet, und eine dritte Nivelliereinheit **57,** die die Vertikalachse 53 in einen dritten definierten Zustand ausrichtet.

Die erste Nivelliereinheit 55 umfasst einen ersten Neigungssensor **58** und ein erstes Verstellelement, die zweite Nivelliereinheit 56 umfasst einen zweiten Neigungssensor **59** und ein zweites Verstellelement und die dritte Nivelliereinheit 57 umfasst einen dritten Neigungssensor **60** und ein drittes Verstellelement. Die Verstellelemente der Nivelliereinheiten 55, 56, 57 sind in eine Neigungseinrichtung **61** integriert, die einen ersten Verstellmotor **62** und einen zweiten Verstellmotor **63** aufweist. Der erste Verstellmotor 62 neigt den Montagerahmen 49 um eine erste Schwenkachse, die mit der zweiten Horizontalachse 52 zusammenfällt, und der zweite Verstellmotor 63 neigt den Montagerahmen 49 um eine zweite Schwenkachse, die mit der ersten Horizontalachse 51 zusammenfällt. Der erste Verstellmotor 62 bildet das erste Verstellelement der ersten Nivelliereinheit 55 und der zweite Verstellmotor 63 bildet das zweite Verstellelement der zweiten Nivelliereinheit 56. Da die Vertikalachse 53 senkrecht zur Horizontalebene der ersten und zweiten Horizontalachse 51, 52 ausgerichtet ist, kann die Ausrichtung der Vertikalachse 53 mittels des ersten und zweiten Verstellmotors 62, 63 eingestellt werden. Der erste und zweite Verstellmotor 62, 63 bilden gemeinsam das dritte Verstellelement der dritten Nivelliereinheit 57.

Die horizontale Ausrichtung der Laserebene bzw. der Gerätebene stellt einen bevorzugten definierten Zustand dar, in den ein Rotationslaser 11 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 11 in Vertikallage ausgerichtet werden soll, wobei die vertikal ausgerichtete Geräteebene auch als Vertikalebene bezeichnet wird. Die Laserebene 38, die der rotierende erste Laserstrahl 22 erzeugt, kann mittels der Neigungseinrichtung 61 gegenüber der Horizontalebene oder der Vertikalebene des Rotationslasers 11 geneigt werden. Der Rotationslaser 11 kann die Laserebene des rotierenden ersten Laserstrahls 22 in einer Neigungsrichtung oder in zwei Neigungsrichtungen neigen. Die Neigung der Laserebene erfolgt im nivellierten Zustand des Rotationslasers 11. Der Rotationslaser 11 kann in Horizontallage oder in Vertikallage geneigt werden.

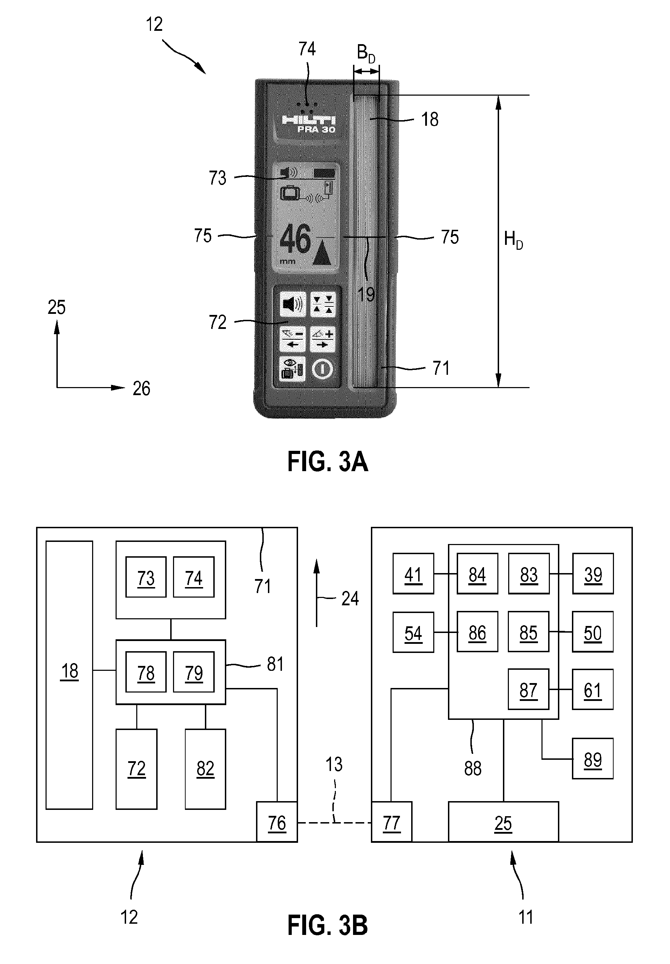

**FIGN. 3A****, B** zeigen den Laserempfänger 12 in einer dreidimensionalen Darstellung (FIG. 3A) und die wesentlichen Komponenten des Laserempfängers 12 sowie das Zusammenwirken mit dem Rotationslaser 11 in einer schematischen Darstellung (FIG. 3B). Der Laserempfänger 12 ist mit einer Messfunktion ausgestattet, die den Abstand eines Laserstrahls zur Nullposition 19 des Detektionsfeldes 18 bestimmt.

Der Laserempfänger 12 umfasst ein Empfängergehäuse **71,** eine Bedienungseinrichtung **72,** ein optisches Display **73,** einen Lautsprecher **74** und das Detektionsfeld 18, mit dem die Auftreffposition eines Laserstrahls erfasst wird. Das Detektionsfeld 18 weist in der Längsrichtung 25 die Detektionshöhe H_{D} und in der Querrichtung 26 die Detektionsbreite B_{D} auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zum Detektionsfeld 18 verlaufen.

Die Bedienungseinrichtung 72, das optische Display 73, der Lautsprecher 74 und das Detektionsfeld 18 sind in das Empfängergehäuse 71 des Laserempfängers 12 integriert. Über das optische Display 73 kann der Bediener Informationen über den Laserempfänger 12 ablesen. Dazu gehören beispielsweise ein Ladezustand des Laserempfängers 12, Informationen über die drahtlose Kommunikationsverbindung 13 zu einem Rotationslaser 11 und die eingestellte Lautstärke des Lautsprechers 74. Außerdem kann der Abstand eines Laserstrahls zur Nullposition 19 des Laserempfängers 12 als numerischer Wert optisch angezeigt werden. Alternativ oder zusätzlich zur optischen Anzeige auf dem optischen Display 73 kann der Abstand des Laserstrahls über den Lautsprecher 74 mitgeteilt werden. Die Nullposition 19 des Detektionsfeldes 18 wird am Empfängergehäuse 71 über Markierungskerben **75** angezeigt.

FIG. 3B zeigt die wesentlichen Komponenten des Laserempfängers 12 und das Zusammenwirken des Laserempfängers 12 mit dem Rotationslaser 11 in Form eines Blockdiagramms. Die Kommunikation zwischen dem Laserempfänger 12 und dem Rotationslaser 11 erfolgt über die Kommunikationsverbindung 13, die eine erste Sende-/Empfangseinheit **76** im Laserempfänger 12 mit einer zweiten Sende-/Empfangseinheit 77 im Rotationslaser 11 verbindet. Die erste und zweite Sende-/Empfangseinheit 76, 77 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 18, das optische Display 73 und der Lautsprecher 74 sind mit einer Auswerteeinrichtung **78** verbunden, die im Inneren des Empfängergehäuses 71 angeordnet ist. Die Auswerteeinrichtung 78 ist mit einer Steuereinrichtung **79** zur Steuerung des Laserempfängers 12 verbunden, wobei die Auswerteeinrichtung 78 und die Steuereinrichtung 79 in eine beispielsweise als Mikrocontroller ausgebildete Kontrolleinrichtung **81** integriert sind. Der Laserempfänger 12 umfasst zusätzlich ein Sensormodul **82,** das im Inneren des Empfängergehäuses 71 angeordnet ist und das mit der Kontrolleinrichtung 81 verbunden ist. Mit Hilfe des Sensormoduls 82 kann eine Neigung des Laserempfängers 12 relativ zur Lotrichtung 24 gemessen werden. Das Sensormodul 82 umfasst einen 2-Achsen-Beschleunigungssensor oder zwei 1-Achs-Beschleunigungssensoren.

Zu den Komponenten des Rotationslasers 11, die über Steuerelemente gesteuert werden oder mit einem Auswertelement verbunden sind, gehören die Strahlquelle 39, die Dreheinrichtung 41, die Messeinrichtung 50 sowie die Nivelliereinrichtung 54 und, falls vorhanden, die Neigungseinrichtung 61. Ein erstes Steuerelement **83** zur Steuerung der Strahlquelle 39, ein zweites Steuerelement **84** zur Steuerung der Dreheinrichtung 41, ein Auswerte- und Steuerelement **85** für die Messeinrichtung 50, ein drittes Steuerelement **86** zur Steuerung der Nivelliereinrichtung 54 und ein viertes Steuerelement **87** zur Steuerung der Neigungseinrichtung 61 können als getrennte Komponenten ausgebildet sein oder, wie in FIG. 3B dargestellt, in eine gemeinsame Kontrolleinrichtung **88,** die beispielsweise als Mikrocontroller ausgebildet ist, integriert sein. Die Steuerelemente sind über Kommunikationsverbindungen mit den zu steuernden Komponenten des Rotationslasers 11 verbunden.

Die Rotationslaser 11 umfasst zusätzlich einen Temperatursensor **89,** der im Gerätegehäuse 31 des Rotationslasers 11 angeordnet ist. Der Temperatursensor 89 misst die Temperatur im Gerätegehäuse 31 und übermittelt die Temperatur an die Kontrolleinrichtung 89 des Rotationslasers 11. Da die Ausrichtung der Neigungssensoren 58, 59, die die erste und zweite Horizontalachse 51, 52 des Rotationslasers 11 in den horizontalen Zustand ausrichten, temperaturabhängig ist und der Rotationslaser 11 in einem großen Temperaturbereich, beispielsweise zwischen -20 °C und +50 °C eingesetzt werden kann, ist es vorteilhaft, wenn in der Kontrolleinrichtung 88 des Rotationslasers 11 mehrere Nulllagen u gespeichert sind. Dazu können für den ersten Neigungssensor 58 mehrere erste Nulllagen υ₁ und für den zweiten Neigungssensor 59 mehrere zweite Nulllagen υ₂ in Abhängigkeit von der Temperatur aufgenommen und in einer Kennlinie oder Tabelle gespeichert werden. Die zur gemessenen Temperatur zugehörige Nulllage wird aus der Kennlinie bzw. Tabelle abgelesen und die Horizontalachse wird in den durch die Nulllage definierten horizontalen Zustand ausgerichtet.

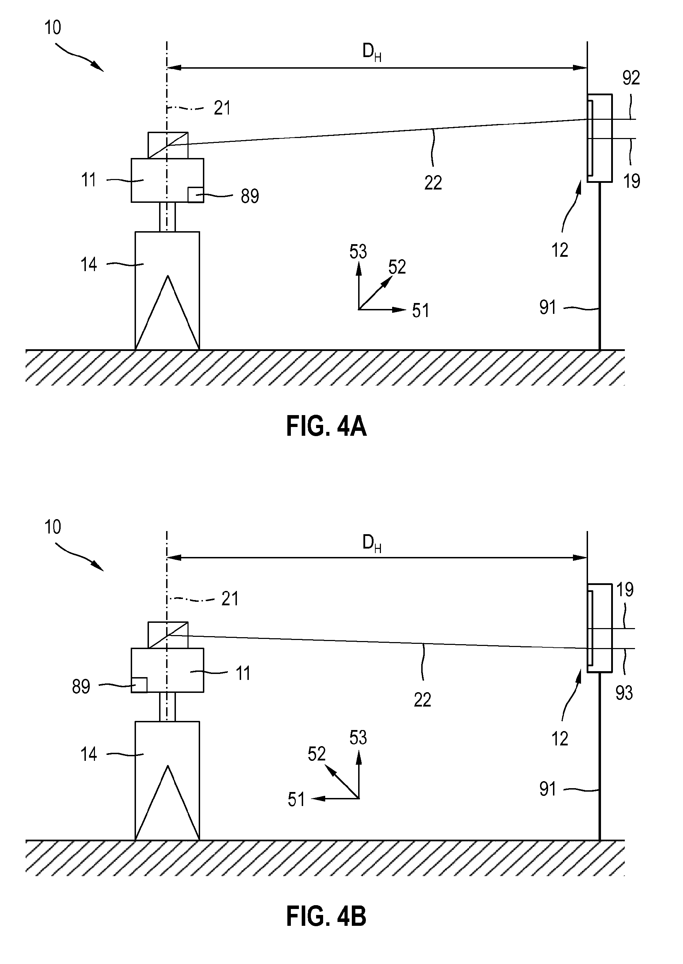

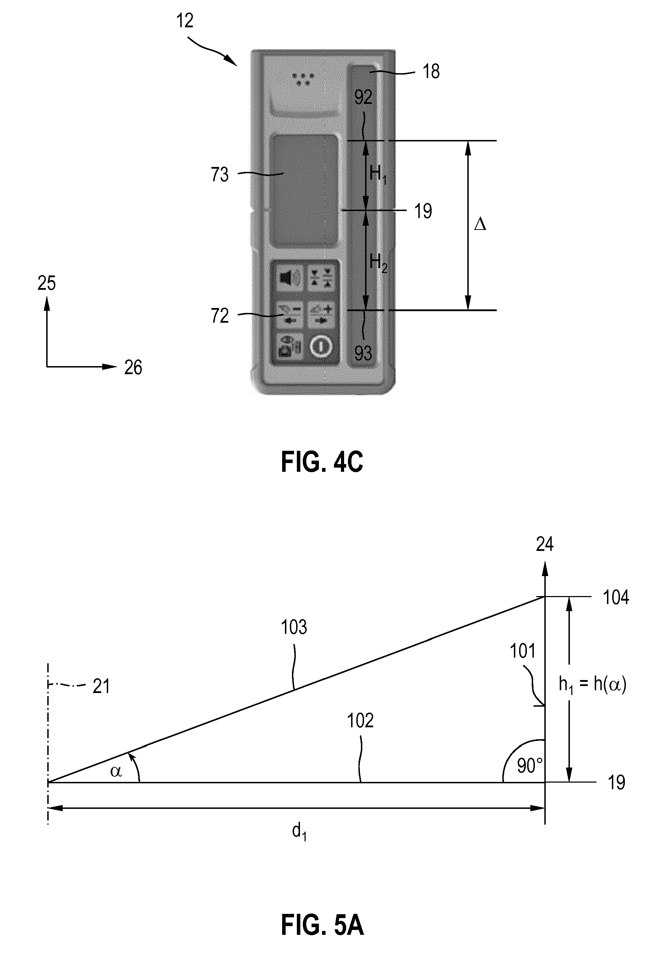

**FIGN. 4A-C** zeigen die Vorrichtung 10 der FIG. 1 mit dem Rotationslaser 11 und dem Laserempfänger 12 bei der Ausführung des erfindungsgemäßen Verfahrens zum Überprüfen und/oder Kalibrieren einer Horizontalachse 51, 52 des Rotationslasers 11, wobei das Verfahren anhand der ersten Horizontalachse 51 vorgestellt wird. FIG. 4A zeigt den Rotationslaser 11 in einer ersten Winkelposition, in der die zu überprüfende erste Horizontalachse 51 auf den Laserempfänger 12 ausgerichtet ist, FIG. 4B den Rotationslaser 11 in einer zweiten Winkelposition, in der die zu überprüfende erste Horizontalachse 51 in einer zur ersten Winkelposition entgegen gerichteten Achsrichtung auf den Laserempfänger 12 ausgerichtet ist und FIG. 4C den Laserempfänger 12 mit den Auftreffpositionen des rotierenden ersten Laserstrahls 22 in der ersten und zweiten Winkelposition. Um die zweite Horizontalachse 52 auf Neigungsfehler zu überprüfen und ggfs. zu kalibrieren, wird die zweite Horizontalachse 52 in beiden Achsrichtung auf den Laserempfänger 12 ausgerichtet.

Das erfindungsgemäße Verfahren zum Überprüfen und/oder Kalibrieren einer Horizontalachse wird in Horizontallage des Rotationslasers 11 und in Längsanordnung des Laserempfängers 12 ausgeführt. Der Rotationslaser 11 wird in Horizontallage auf dem Stativ 14 oder auf einem stabilen Untergrund in einer Messentfernung **D_{H}** zum Laserempfänger 12 aufgestellt, wobei die Messentfernung D_{H} zwischen dem Zentrum der Umlenkoptik 37 des Rotationslasers 11 und der Oberseite des Detektionsfeldes 18 des Laserempfängers 12 gemessen wird. Die Verwendung des Stativs 14 hat den Vorteil, dass das erfindungsgemäße Verfahren in einer Höhe durchgeführt wird, in der Temperaturschwankungen geringer ausfallen als am Boden. Der Laserempfänger 12 wird an einer feststehenden Wand, einer mobilen Wand oder einer Messlatte **91** befestigt.

Um die Horizontallage des Rotationslasers 11 einzustellen, werden die erste und zweite Horizontalachse 51, 52 in einen horizontalen Zustand ausgerichtet, wobei der horizontale Zustand der ersten Horizontalachse 51 durch die erste Nulllage υ₁ des ersten Neigungssensors 58 und der horizontale Zustand der zweiten Horizontalachse 52 durch die zweite Nulllage υ₂ des zweiten Neigungssensors 59 festgelegt ist. Die erste Horizontalachse 51 wird mittels der ersten Nivelliereinheit 55 in die erste Nulllage υ₁ ausgerichtet und die zweite Horizontalachse 52 wird mittels der zweiten Nivelliereinheit 59 in die zweite Nulllage υ₂ ausgerichtet. In der Kontrolleinrichtung 89 des Rotationslasers 11 sind die erste Nulllage υ₁ für den ersten Neigungssensor 58 und die zweite Nulllage υ₂ für den zweiten Neigungssensor 59 gespeichert.

Der Rotationslaser 11 wird zum Überprüfen der ersten Horizontalachse 51 nacheinander in einer ersten und zweiten Winkelposition angeordnet, die sich um 180° voneinander unterscheiden. Der Rotationslaser 11 kann mit Hilfe der Drehplattform 16 oder manuell vom Bediener in die Winkelpositionen ausgerichtet werden. Der Rotationslaser 11 wird in der ersten Winkelposition angeordnet (FIG. 4A), wobei die erste Horizontalachse 51 in der ersten Winkelposition auf das Detektionsfeld 18 des Laserempfängers 12 ausgerichtet ist. Die Auftreffposition des ersten Laserstrahls 22 auf dem Detektionsfeld 18 des Laserempfängers 12 wird von der Auswerteeinrichtung 78 des Laserempfängers 12 als erster Kontrollpunkt **92** bestimmt und der Abstand des ersten Kontrollpunktes 92 zur Nullposition 19 des Detektionsfeldes 18 wird als erster Höhenversatz **H₁** (FIG. 4C) gespeichert. Der Rotationslaser 11 wird aus der ersten Winkelposition um 180° um die Rotationsachse 21 in die zweite Winkelposition ausgerichtet (FIG. 4B). In der zweiten Winkelposition ist die zu überprüfende erste Horizontalachse 51 in entgegen gerichteter Achsrichtung auf das Detektionsfeld 18 des Laserempfängers 12 ausgerichtet. Die Auftreffposition des ersten Laserstrahls 22 auf dem Detektionsfeld 18 des Laserempfängers 12 wird von der Auswerteeinrichtung 78 des Laserempfängers 12 als zweiter Kontrollpunkt **93** bestimmt und der Abstand des zweiten Kontrollpunktes 93 zur Nullposition 19 des Detektionsfeldes 18 wird als zweiter Höhenversatz **H₂** (FIG. 4C) gespeichert.

Die Auswerteeinrichtung 78 des Laserempfängers 12 berechnet den Abstand zwischen dem ersten Kontrollpunkt 92 und zweiten Kontrollpunkt 93 als Differenz Δ aus dem ersten und zweiten Höhenversatz H₁, H₂. Die Auswertung kann wie beschrieben von der Auswerteeinrichtung 78 des Laserempfängers 12 durchgeführt werden. Alternativ kann die Auswertung von einer entsprechenden Komponente im Rotationslaser 11 oder einer weiteren Komponente durchgeführt werden. Wenn die Auswertung nicht von der Auswerteeinrichtung 78 des Laserempfängers 12 durchgeführt wird, werden der erste und zweite Kontrollpunkt 92, 93 oder die Differenz Δ über eine Kommunikationsverbindung an die entsprechende Komponente übermittelt.

Die Auswerteeinrichtung 78 des Laserempfängers 12 berechnet aus der Differenz Δ = H₁ - H₂ und der Messentfernung D_{H} zwischen dem Rotationslaser 11 und dem Laserempfänger 12 eine relative Abweichung **Δ/D_{H}** und vergleicht die relative Abweichung Δ/D_{H} mit einer festgelegten relativen Maximalabweichung **Δₘₐₓ/D_{H}.** Alternativ kann aus der relativen Maximalabweichung Δₘₐₓ/D_{H} und der Messentfernung D_{H} eine Maximalabweichung Δₘₐₓ berechnet und die Differenz Δ mit der Maximalabweichung Δₘₐₓ verglichen werden. Wenn die relative Abweichung Δ/D_{H} grösser als die relative Maximalabweichung bzw. die Differenz Δ grösser als die Maximalabweichung Δₘₐₓ ist, ist eine Kalibrierung der ersten Horizontalachse 51 erforderlich. Die Auswerteeinrichtung 78 berechnet aus dem ersten Höhenversatz H₁, dem zweiten Höhenversatz H₂ und der Messentfernung D_{H} einen Korrekturwinkel θ, der als neue erste Nulllage für die Ausrichtung der ersten Horizontalachse 51 in den horizontalen Zustand gespeichert wird. Der Korrekturwinkel θ kann gemäß der Formel tan(θ) = (H₁ - H₂)/2D_{H} berechnet werden.

Die Messentfernung D_{H} zwischen dem Rotationslaser 11 und dem Laserempfänger 12 wird in einem ersten und/oder zweiten Messverfahren mittels des Rotationslasers 11 und des Laserempfängers 12 bestimmt. Dabei kann die Messentfernung D_{H} zwischen dem Rotationslaser 11 und dem Laserempfänger 12 zu unterschiedlichen Zeitpunkten bei der Durchführung des erfindungsgemäßen Verfahrens zum Überprüfen und/oder Kalibrieren einer Horizontalachse bestimmt werden. Die Messentfernung D_{H} kann als erste Distanz **d₁** mittels eines ersten Messverfahrens, als zweite Distanz **d₂** mittels eines zweiten Messverfahrens oder als gemittelte Distanz **d** aus der ersten und zweiten Distanz d₁, d₂ bestimmt werden. Dabei erfolgt die Bestimmung der ersten und zweiten Distanz d₁, d₂ in Horizontallage des Rotationslasers 11 und Längsanordnung des Laserempfängers 12.

Beim zweiten Messverfahren wird der Rotationslaser 11 in einem Rotationsmodus betrieben und der rotierende erste Laserstrahl 22 mit einer konstanten Rotationsgeschwindigkeit **v_{R}** um die Rotationsachse 21 bewegt. Das zweite Messverfahren umfasst die Verfahrensschritte: Der Rotationslaser 11 wird horizontal ausgerichtet und der erste Laserstrahl 22 mit der konstanten Rotationsgeschwindigkeit v_{R} um die Rotationsachse 21 rotiert. Die Auswerteeinrichtung 78 des Laserempfängers 12 bestimmt eine Signallänge **tₛ** des rotierenden ersten Laserstrahls 22 auf dem Detektionsfeld 18 des Laserempfängers 12. Die zweite Distanz d₂ kann aus der Rotationsgeschwindigkeit v_{R} des ersten Laserstrahls 22, der Signallänge tₛ des ersten Laserstrahls 22 und der Detektionsbreite B_{D} des Detektionsfeldes 18 gemäß tₛ/t_{full} = B_{D}/(2πd₂) mit t_{full} = 60/v_{R} berechnet werden. Die Rotationsgeschwindigkeit v_{R} wird in Umdrehungen pro Minute angegeben und die für eine Umdrehung erforderliche Zeit t_{full} beträgt 60/v_{R}.

**FIGN. 5A-C** zeigen drei Varianten des ersten Messverfahrens, mit dem die Messentfernung D_{H} zwischen dem Rotationslaser 11 und dem Laserempfänger 12 als erste Distanz d₁ bestimmt wird. Der Laserempfänger 12 ist parallel zur Lotrichtung 24 ausgerichtet und die erste Distanz d₁ wird zwischen der Rotationsachse 21 des Rotationslasers 11 und einer Vorderseite **101** des Detektionsfeldes 18 des Laserempfängers 12 gemessen. Zu Beginn des ersten Messverfahrens befinden sich die Horizontalachsen 51, 52 des Rotationslasers 11 im horizontalen Zustand oder werden in den horizontalen Zustand ausgerichtet. Der Rotationslaser 11 sendet einen horizontal ausgerichteten Laserstrahl **102** aus.

Beim ersten Messverfahren wird der Rotationslaser 11 in einem Punktmodus betrieben und der Laserstrahl wird nicht um die Rotationsachse 21 bewegt. Der Laserstrahl wird um einen bekannten Neigungswinkel α geneigt und die Auftreffposition des geneigten Laserstrahls auf dem Detektionsfeld 18 des Laserempfängers 12 wird als Messpunkt bestimmt und der Höhenversatz des Messpunktes als Höhe gespeichert. Dabei kann die Neigung des Laserstrahls mittels der Nivelliereinrichtung 54 oder der Neigungseinrichtung 61 durchgeführt werden. Die Verwendung der Nivelliereinrichtung 54 hat den Vorteil, dass die erste Distanz d₁ auch von Rotationslasern 11 ohne Neigungseinrichtung 61 bestimmt werden kann.

Das erste Messverfahren setzt voraus, dass der Rotationslaser 11 so zum Laserempfänger 12 ausgerichtet ist, dass die Neigungsrichtung annähernd senkrecht zum Detektionsfeld 18 des Laserempfängers 12 verläuft. Abweichungen von der senkrechten Ausrichtung führen zu Messfehlern, die für kleine Abweichungen tolerierbar sind. Wenn die erste Horizontalachse 51 auf das Detektionsfeld 18 ausgerichtet ist, erfolgt die Neigung des Laserstrahls mittels der ersten Nivelliereinheit 55, die den ersten Neigungssensor 58 und das erste Verstellelement 62 umfasst. Da die erste Horizontalachse 51 im Ausführungsbeispiel der FIGN. 4A-C in der ersten und zweiten Winkelposition auf das Detektionsfeld 65 ausgerichtet ist, ist es vorteilhaft, die erste Distanz d₁ während des erfindungsgemäßen Verfahrens in der ersten oder zweiten Winkelposition zu bestimmen. Alternativ kann die erste Distanz d₁ in einer separaten Messroutine vor dem erfindungsgemäßen Verfahren bestimmt werden.

FIG. 5A zeigt die erste Variante des ersten Messverfahrens. Der horizontal ausgerichtete Laserstrahl 102 wird auf die Nullposition 19 des Laserempfängers 12 eingestellt. Das Ausrichten des Laserstrahls 102 auf die Nullposition 19 kann beispielsweise mit einem höhenverstellbaren Stativ durchgeführt werden. Für eine vollautomatische Ausführung eignet sich ein Stativ mit einer sogenannten "Auto-Alignment-Funktion", wie sie in dem europäischen Patent EP 1 203 930 B1 beschrieben ist. Der Laserstrahl wird anschließend mit Hilfe der entsprechenden Nivelliereinheit der Nivelliereinrichtung 54 oder der Neigungseinrichtung 61 um den Neigungswinkel α geneigt. Die Auftreffposition des geneigten Laserstrahls **103** auf dem Detektionsfeld 18 des Laserempfängers 12 wird als erster Messpunkt **104** bestimmt und der Abstand des ersten Messpunktes 104 zur Nullposition 19 wird als erste Höhe **h₁** = **h(α)** gespeichert. Die erste Distanz d₁ kann aus dem Neigungswinkel α und der Höhendifferenz zwischen der ersten Höhe (h₁ = h(α)) und der Nullposition 19 des Detektionsfeldes 18 berechnet werden. Wenn die Nullposition 19 einer Höhe von 0 mm entspricht, kann die erste Distanz d₁ gemäß tan(α) = h(α)/d₁ berechnet werden.

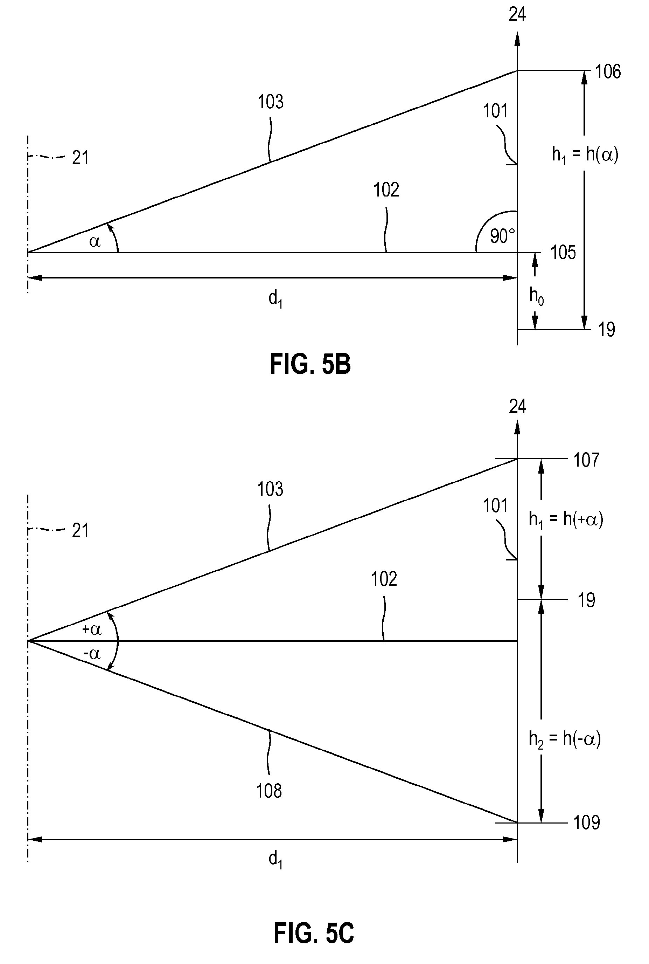

FIG. 5B zeigt die zweite Variante des ersten Messverfahrens. Der horizontal ausgerichtete Laserstrahl 102 wird auf das Detektionsfeld 18 des Laserempfängers 12 ausgesandt. Die Auftreffposition des Laserstrahls 102 auf dem Detektionsfeld 18 wird als Referenzpunkt **105** bestimmt und der Abstand des Referenzpunktes 105 zur Nullposition 19 als Referenzhöhe **h₀** = **h(0°)** gespeichert. Der Laserstrahl wird anschließend um den Neigungswinkel α geneigt und die Auftreffposition des geneigten Laserstrahls 103 auf dem Detektionsfeld 18 wird als erster Messpunkt **106** bestimmt und der Abstand des ersten Messpunktes 106 zur Nullposition 19 als erste Höhe **h₁ = h(α)** gespeichert. Die erste Distanz d₁ kann aus dem Neigungswinkel α und der Höhendifferenz zwischen der ersten Höhe h₁ = h(α) und der Referenzhöhe h₀= h(0°) gemäß tan(α) = (h₁ - h₀)/d₁ berechnet werden.

FIG. 5C zeigt die dritte Variante des ersten Messverfahrens. Der horizontal ausgerichtete Laserstrahl 102 wird in einer positiven Neigungsrichtung um den Neigungswinkel α geneigt. Die Auftreffposition des geneigten Laserstrahls 103 auf dem Detektionsfeld 18 wird als erster Messpunkt **107** bestimmt und der Abstand des ersten Messpunktes 107 zur Nullposition 19 als erste Höhe **h₁** = **h(+α)** gespeichert. Anschließend wird der Laserstrahl in einer zur positiven Neigungsrichtung entgegen gerichteten negativen Neigungsrichtung um einen negativen Neigungswinkel -α geneigt. Die Auftreffposition des geneigten Laserstrahls **108** auf dem Detektionsfeld 18 wird als zweiter Messpunkt **109** bestimmt und der Abstand des zweiten Messpunktes 109 zur Nullposition 19 als zweite Höhe **h₂** = **h(-α)** gespeichert. Die erste Distanz d₁ kann aus dem Neigungswinkel α und der Höhendifferenz zwischen der ersten Höhe h₁ = h(+α) und der zweiten Höhe h₂ = h(-α) gemäß tan(2α) = (h(+α) - h(-α))/d₁ berechnet werden.

Die Formeln zur Berechnung der Messentfernung D_{H} zwischen dem Rotationslaser 11 und dem Laserempfänger 12 und die Formeln zur Berechnung des Korrekturwinkels θ₁ beim Kalibrieren einer Horizontalachse gelten für einen Laserempfänger 12, der parallel zur Lotrichtung 24 ausgerichtet ist. Um Messfehler durch eine nicht-lotrechte Ausrichtung des Laserempfängers 12 zu korrigieren, umfasst der Laserempfänger 12 das Sensormodul 82, mit dem die Neigung des Laserempfängers 12 relativ zur Lotrichtung 24 gemessen wird.

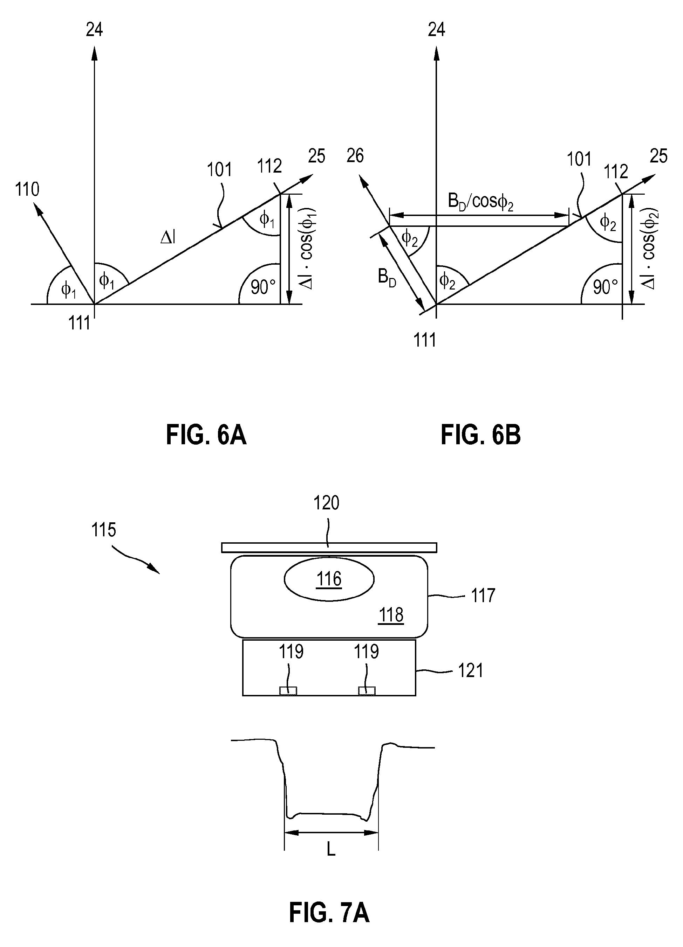

**FIGN. 6A****, B** zeigen die Ausrichtung des Laserempfängers 12 in einer schematischen Darstellung, wobei der Laserempfänger 12 zur Lotrichtung 24 um einen ersten Vertikalwinkel φ₁ und/oder einen zweiten Vertikalwinkel φ₂ geneigt sein kann. Dabei zeigt FIG. 6A den Laserempfänger 12, der in einer ersten Vertikalebene um den ersten Vertikalwinkel φ₁ geneigt ist, und FIG. 6B den Laserempfänger 12, der in einer zweiten Vertikalebene um den zweiten Vertikalwinkel φ₂ geneigt ist. Die erste Vertikalebene wird von der Lotrichtung 24 und einem Normalenvektor **110** des Detektionsfeldes 18 aufgespannt und die zweite Vertikalebene wird von der Längsrichtung 25 und der Querrichtung 26 des Detektionsfeldes 18 aufgespannt. Der erste Vertikalwinkel φ₁ wird zwischen dem Normalenvektor 110 und der Lotrichtung 24 gemessen, wobei der erste Vertikalwinkel φ₁ die Abweichung von 90 ° darstellt, und der zweite Vertikalwinkel φ₂ wird zwischen der Lotrichtung 24 und der Längsrichtung 25 des Detektionsfeldes 18 gemessen.

Ein erster Laserstrahl trifft auf das Detektionsfeld 18 des Laserempfängers 12 und erzeugt eine erste Auftreffposition **111.** Ein zweiter Laserstrahl trifft auf das Detektionsfeld 18 des Laserempfängers 12 und erzeugt eine zweite Auftreffposition **112.** Die Auswerteeinrichtung 78 des Laserempfängers 12 berechnet einen Abstand Δl zwischen der ersten Auftreffposition 111 und der zweiten Auftreffposition 112. Beim Verfahren zum Überprüfen und/oder Kalibrieren einer Horizontalachse entspricht der Abstand Δl der Differenz Δ aus dem ersten Höhenversatz H₁ und dem zweiten Höhenversatz H₂ und bei der Distanzmessung mittels des ersten Messverfahrens entspricht der Abstand Δl der Höhendifferenz Δh zwischen der ersten Höhe h₁ und der zweiten Höhe h₂.

Ist der Laserempfänger 12 gegenüber der Lotrichtung 24 um den ersten Vertikalwinkel φ₁ geneigt, ist der vertikale Abstand **v₁** in der ersten Vertikalebene kleiner als der Abstand Δl, den das Detektionsfeld 18 des Laserempfängers 12 gemessen hat (FIG. 6A). Für den vertikalen Abstand v₁ gilt der Zusammenhang Δl · cos(φ₁). Ist der Laserempfänger 12 gegenüber der Lotrichtung 24 um den zweiten Vertikalwinkel φ₂ geneigt, ist der vertikale Abstand **v₂** in der zweiten Vertikalebene kleiner als der Abstand Δl, den das Detektionsfeld 18 des Laserempfängers 12 gemessen hat (FIG. 6B). Für den vertikalen Abstand v₂ gilt der Zusammenhang Δl · cos(φ₂). Wenn der Laserempfänger 12 gegenüber der Lotrichtung 24 um den ersten Vertikalwinkel φ₁ und den zweiten Vertikalwinkel φ₂ geneigt ist, gilt für den vertikalen Abstand der Zusammenhang Δl · cos(φ₁) · cos(φ₂). In den Formeln, die die Messfunktion des Laserempfängers 12 nutzen und Abstände Δl auf dem Detektionsfeld 18 messen, werden die Abstände Δl mit einem Korrekturfaktor cos(φ₁) · cos(φ₂) multipliziert. Der Korrekturfaktor cos(φ₁). cos(φ₂) ist bei der Distanzmessung der ersten Distanz d₁ mittels des ersten Messverfahrens, bei der Bestimmung der Differenz Δ zwischen dem ersten und zweiten Kontrollpunkt 92, 93 und der Berechnung des Korrekturwinkels θ im Rahmen des erfindungsgemäßen Verfahrens zu berücksichtigen.

Der zweite Vertikalwinkel φ₂ sollte auch bei der Berechnung der zweiten Distanz d₂ mittels des zweiten Messverfahrens berücksichtigt werden. Durch die Neigung des Laserempfängers 12 um den zweiten Vertikalwinkel φ₂ ist der horizontale Abstand, den der rotierende erste Laserstrahl 22 auf dem Detektionsfeld 18 überstreift, grösser als die Detektionsbreite B_{D} des Detektionsfeldes 18 in Querrichtung 26. Die Signallänge des rotierenden ersten Laserstrahls 22 entspricht dem horizontalen Abstand auf dem Detektionsfeld 18. Für den horizontalen Abstand gilt der Zusammenhang B_{D}/cos(φ₂). Eine Neigung des Laserempfängers 12 um den ersten Vertikalwinkel φ₁ verändert den horizontalen Abstand, den der rotierende erste Laserstrahl 22 auf dem Detektionsfeld 18 überstreift, nicht.

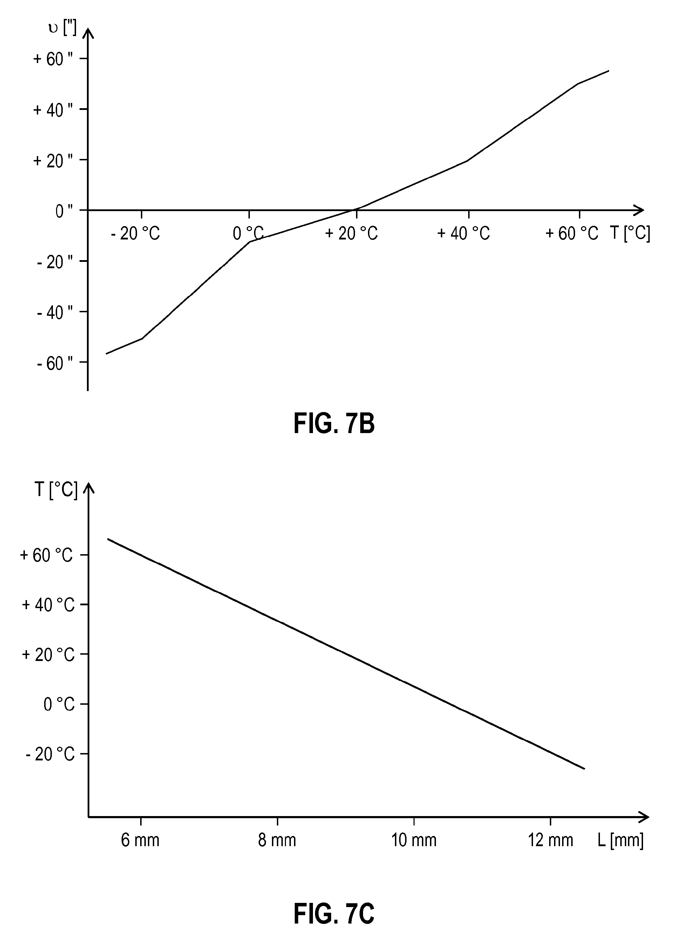

**FIGN. 7A-C** zeigen den Aufbau eines optischen Neigungssensors **115** mit einer Gasblase **116** (FIG. 7A), eine Kennlinie, die die Nulllage u des Neigungssensors 115 abhängig von einer Temperatur **T** darstellt (FIG. 7B), und eine weitere Kennlinie, die die Temperatur T abhängig von einer Blasenlänge **L** der Gasblase 116 darstellt (FIG. 7C).

Bei Außenanwendungen des Rotationslasers 11 kann es durch Sonneneinstrahlung zu Temperaturschwankungen im Gerätegehäuse 31 des Rotationslasers 11 kommen, so dass die gemessene Temperatur von der Position des Temperatursensors 89 im Gerätegehäuse 31 abhängig ist. Um Messfehler bei der Temperaturmessung zu reduzieren, können die Temperaturen der Neigungssensoren 58, 59 gemessen werden. Die Temperatur des ersten Neigungssensors 58 wird als erste Temperatur **T₁** und die Temperatur des zweiten Neigungssensors 59 als zweite Temperatur **T₂** bezeichnet. Die Temperaturmessung erfolgt mittels der Neigungssensoren 58, 59. Die Temperaturmessung mittels der Neigungssensoren 58, 59 hat den Vorteil, dass die Temperatur T₁, T₂ genau an dem Ort im Gerätegehäuse 31 des Rotationslasers 11 gemessen wird, der für die Ausrichtung der ersten und zweiten Horizontalachse 51, 52 relevant ist.

FIG. 7A zeigt die Komponenten des Neigungssensors 115, der im Aufbau den Neigungssensoren 58, 59 des Rotationslasers 11 entspricht. Der Neigungssensor 115 umfasst ein Gehäuse **117,** das mit der Gasblase 116 und einer Flüssigkeit **118** gefüllt ist, eine Lichtquelle **119,** einen Fotodetektor **120** und einen Abstandhalter **121.** Die Gasblase 116 weist eine Blasenlänge L auf, die temperaturabhängig ist und sich daher als Messgröße für die Temperatur T eignet. Die Blasenlänge L der Gasblase 116 kann mit Hilfe der Lichtquelle 119 und des Fotodetektors 120 gemessen werden. Zur Unterscheidung des ersten und zweiten Neigungssensors 58, 59 werden die Komponenten mit einem Index versehen, der mit einem Bindestrich vom Bezugszeichen abgetrennt ist. Der erste Neigungssensor 58 weist den Index "1" und der zweite Neigungssensor 59 den Index "2" auf.

FIG. 7B zeigt eine Kennlinie, die die Nulllage u des Neigungssensors 115 abhängig von der Temperatur T darstellt. Die Kennlinie stellt für den zugelassenen Temperaturbereich des Rotationslasers 11 von - 20 °C bis + 50 °C einen Zusammenhang zwischen der Temperatur des Neigungssensors 115 und der Nulllage u des Neigungssensors 115, die der Ausrichtung in den definierten Zustand des Neigungssensors 115 entspricht, her. In der Kontrolleinrichtung 89 des Rotationslasers 11 sind eine erste Kennlinie, die die erste Nulllage υ₁ des ersten Neigungssensors 58 abhängig von der ersten Temperatur T₁ darstellt, und eine zweite Kennlinie, die die zweite Nulllage υ₂ des zweiten Neigungssensors 59 abhängig von der zweiten Temperatur T₂ darstellt, gespeichert.

FIG. 7C zeigt eine weitere Kennlinie, die die Temperatur T abhängig von der Blasenlänge L der Gasblase 116 darstellt. Die Kennlinie stellt für den zugelassenen Temperaturbereich des Rotationslasers 11 von - 20 °C bis + 50 °C einen Zusammenhang zwischen der Temperatur T des Neigungssensors 115 und der Blasenlänge L der Gasblase 116 her. Die Blasenlänge L der Gasblase 116 verändert sich linear mit der Temperatur T des Neigungssensors 115, wobei die Blasenlänge L mit sinkender Temperatur T abnimmt. In der Kontrolleinrichtung 89 des Rotationslasers 11 sind eine dritte Kennlinie, die die erste Temperatur T₁ abhängig von der ersten Blasenlänge L₁ der ersten Gasblase 116-1 darstellt, und eine vierte Kennlinie, die die zweite Temperatur T₂ abhängig von der zweiten Blasenlänge L₂ der zweiten Gasblase 116₂ darstellt, gespeichert.

Alternativ kann die Kennlinie, die die Nulllage u des Neigungssensors 115 in Abhängigkeit von der Temperatur T darstellt, durch eine Kennlinie ersetzt werden, die die Nulllage u des Neigungssensors 115 in Abhängigkeit von der Blasenlänge L der Gasblase 116 darstellt. In diesem Fall sind in der Kontrolleinrichtung 89 des Rotationslasers 11 eine erste Kennlinie, die die erste Nulllage υ₁ des ersten Neigungssensors 58 in Abhängigkeit von der ersten Blasenlänge L₁ der ersten Gasblase 116-1 darstellt, und eine zweite Kennlinie, die die zweite Nulllage υ₂ des zweiten Neigungssensors 59 in Abhängigkeit von der zweiten Blasenlänge L₂ der zweiten Gasblase 116-2 darstellt, gespeichert.

## Patentansprüche

1. Verfahren zum Überprüfen und/oder Kalibrieren einer ersten oder zweiten Horizontalachse (51, 52) eines Rotationslasers (11), der einen um eine Rotationsachse (21) rotierbaren Laserstrahl (22) aussendet, mit den Schritten:
▪ der Rotationslaser (11) wird in einer Messentfernung (D_{H}) zu einem Laserempfänger (12) positioniert, wobei der Rotationslaser (11) in Horizontallage und der Laserempfänger (12) in Längsanordnung ausgerichtet werden,
▪ die erste und zweite Horizontalachse (51, 52) des Rotationslasers (11) werden in einen horizontalen Zustand ausgerichtet, wobei der horizontale Zustand der Horizontalachsen (51, 52) durch eine erste Nulllage (υ₁) für die erste Horizontalachse (51) und eine zweite Nulllage (υ₂) für die zweite Horizontalachse (52) festgelegt ist,
▪ der Rotationslaser (11) wird in einer ersten Winkelposition angeordnet, wobei die zu überprüfende Horizontalachse in der ersten Winkelposition auf ein Detektionsfeld (18) des Laserempfängers (12) ausgerichtet wird,
▪ die Auftreffposition des Laserstrahls (22) auf dem Detektionsfeld (18) des Laserempfängers (12) wird als erster Kontrollpunkt (92) bestimmt und der Abstand des ersten Kontrollpunktes (92) zu einer Nullposition (19) des Detektionsfeldes (18) als erster Höhenversatz (H₁) gespeichert,
▪ der Rotationslaser (11) wird in einer zweiten Winkelposition angeordnet, wobei die zweite Winkelposition zur ersten Winkelposition um 180° um die Rotationsachse (21) gedreht ist,
▪ die Auftreffposition des Laserstrahls (22) auf dem Detektionsfeld (18) des Laserempfängers (12) wird als zweiter Kontrollpunkt (93) bestimmt und der Abstand des zweiten Kontrollpunktes (93) zur Nullposition (19) des Detektionsfeldes (18) als zweiter Höhenversatz (H₂) gespeichert,
▪ der Abstand zwischen dem ersten Kontrollpunkt (92) und zweiten Kontrollpunkt (93) wird als Differenz (Δ = H₁ - H₂) aus dem ersten und zweiten Höhenversatz (H₁, H₂) berechnet,
▪ die Messentfernung (D_{H}) zwischen dem Rotationslaser (11) und dem Laserempfänger (12) wird bestimmt und
▪ die Differenz (Δ) wird mit einer Maximaldifferenz (Δₘₐₓ) verglichen.

2. Verfahren nach Anspruch 1, **dadurch gekennzeichnet, dass** die Messentfernung (D_{H}) zwischen dem Rotationslaser (11) und dem Laserempfänger (12) mittels des rotierbaren Laserstrahls (22) und des Laserempfängers (12) bestimmt wird.

3. Verfahren nach Anspruch 2, **dadurch gekennzeichnet, dass** die Messentfernung (D_{H}) zwischen dem Rotationslaser (11) und dem Laserempfänger (12) als erste Distanz (d₁) mittels eines ersten Messverfahrens, als zweite Distanz (d₂) mittels eines zweiten Messverfahrens oder als gemittelte Distanz (d) aus der ersten und zweiten Distanz (d₁, d₂) bestimmt wird.

4. Verfahren nach Anspruch 3, **dadurch gekennzeichnet, dass** der Rotationslaser (11) horizontal ausgerichtet wird, der horizontal ausgerichtete Laserstrahl (102) auf die Nullposition (19) des Detektionsfeldes (18) eingestellt wird, der Laserstrahl in Richtung des Laserempfängers (12) um einen Neigungswinkel (α) geneigt wird, die Auftreffposition des geneigten Laserstrahls (103) auf dem Detektionsfeld (18) des Laserempfängers (12) als erster Messpunkt (104) bestimmt wird, der Abstand des ersten Messpunktes (104) zur Nullposition (19) des Detektionsfeldes (18) als erste Höhe (h₁ = h(α)) gespeichert wird und die erste Distanz (d₁) aus dem Neigungswinkel (α) und einer Höhendifferenz (Δh) zwischen der ersten Höhe (h₁ = h(α)) und der Nullposition (19) des Detektionsfeldes (18) berechnet wird.

5. Verfahren nach Anspruch 3, **dadurch gekennzeichnet, dass** der Rotationslaser (11) horizontal ausgerichtet wird, die Auftreffposition des horizontal ausgerichteten Laserstrahls (102) auf dem Detektionsfeld (18) des Laserempfängers (12) als Referenzpunkt (105) bestimmt wird, der Abstand des Referenzpunktes (105) zur Nullposition (19) des Detektionsfeldes (18) als Referenzhöhe (h₀) gespeichert wird, der Laserstrahl um einen Neigungswinkel (α) geneigt wird, die Auftreffposition des geneigten Laserstrahls (103) auf dem Detektionsfeld (18) als erster Messpunkt (106) bestimmt wird, der Abstand des ersten Messpunktes (106) zur Nullposition (19) des Detektionsfeldes (18) als erste Höhe (h₁ = h(α)) gespeichert wird und die erste Distanz (d₁) aus dem Neigungswinkel (α) und einer Höhendifferenz (Δh = h₁ - h₀) zwischen der ersten Höhe (h₁) und der Referenzhöhe (h₀) berechnet wird.

6. Verfahren nach Anspruch 3, **dadurch gekennzeichnet, dass** der Rotationslaser (11) horizontal ausgerichtet wird, der horizontal ausgerichtete Laserstrahl (102) in einer Neigungsrichtung um einen Neigungswinkel (α) geneigt wird, die Auftreffposition des geneigten Laserstrahls (103) auf dem Detektionsfeld (18) des Laserempfängers (12) als erster Messpunkt (107) bestimmt wird, der Abstand des ersten Messpunktes (107) zur Nullposition (19) des Detektionsfeldes (18) als erste Höhe (h₁ = h(α)) gespeichert wird, der Laserstrahl in einer entgegen gerichteten Neigungsrichtung um einen negativen Neigungswinkel (-α) geneigt wird, die Auftreffposition des geneigten Laserstrahls (108) auf dem Detektionsfeld (18) als zweiter Messpunkt (109) bestimmt wird, der Abstand des zweiten Messpunktes (109) zur Nullposition (19) des Detektionsfeldes (18) als zweite Höhe (h₂ = h(-α)) gespeichert wird und die erste Distanz (d₁) aus dem Neigungswinkel (α) und einer Höhendifferenz (Δh = h₁ - h₂) zwischen der ersten Höhe (h₁) und der zweiten Höhe (h₂) berechnet wird.

7. Verfahren nach Anspruch 3, **dadurch gekennzeichnet, dass** der Rotationslaser (11) horizontal ausgerichtet wird, der horizontal ausgerichtete Laserstrahl (102) mit einer Rotationsgeschwindigkeit (v_{R}) um die Rotationsachse (21) rotiert wird, die Signallänge des rotierenden Laserstrahls (22) auf dem Detektionsfeld (18) des Laserempfängers (12) bestimmt wird und die zweite Distanz (d₂) aus der Rotationsgeschwindigkeit (v_{R}), der Signallänge (tₛ) und einer Detektionsbreite (B_{D}) des Detektionsfeldes (18) berechnet wird.

8. Verfahren nach einem der Ansprüche 1 bis 7, **dadurch gekennzeichnet, dass** eine Neigung des Laserempfängers (12) relativ zu einer Lotrichtung (24) als erster Vertikalwinkel (φ₁) in einer ersten Vertikalebene und/oder als zweiter Vertikalwinkel (φ₂) in einer zweiten Vertikalebene ermittelt wird, wobei die erste Vertikalebene von der Lotrichtung (24) und einem Normalenvektor (110) des Detektionsfeldes (18) des Laserempfängers (12) und die zweite Vertikalebene von einer Längsrichtung (25) und einer Querrichtung (26) des Detektionsfeldes (18) aufgespannt wird.

9. Verfahren nach Anspruch 8, **dadurch gekennzeichnet, dass** für den ersten Vertikalwinkel (φ₁) und/oder den zweiten Vertikalwinkel (φ₂) bei der Auswertung mit dem Laserempfänger (12) ein winkelabhängiger Korrekturfaktor (cos(φ₁), cos(φ₂), 1/cos(φ₂)) multipliziert wird.

10. Verfahren nach Anspruch 1, **dadurch gekennzeichnet, dass** für die Ausrichtung der zu überprüfenden Horizontalachse (51, 52) in den horizontalen Zustand mehrere Nulllagen (υ₁, υ₂) in Abhängigkeit von einer Temperatur (T) oder einer von der Temperatur (T) abhängigen Messgröße (L) aufgenommen und in einer Kennlinie gespeichert werden.

11. Verfahren nach Anspruch 10, **dadurch gekennzeichnet, dass** die Temperatur (T) oder die von der Temperatur (T) abhängige Messgröße (L) des Rotationslasers (11) gemessen wird, die zur Temperatur (T) oder Messgröße (L) zugehörige Nulllage (υ₁, υ₂) aus der Kennlinie ermittelt wird und die Horizontalachse (51, 52) in den durch die Nulllage (υ₁, υ₂) definierten horizontalen Zustand ausgerichtet wird.

12. Verfahren nach Anspruch 11, **dadurch gekennzeichnet, dass** die Temperatur (T) mittels eines Neigungssensors (115), der ein Gehäuse (117), das mit einer Flüssigkeit (118) und einer Gasblase (116) gefüllt ist, mindestens eine Lichtquelle (119) und mindestens einen Fotodetektor (120) umfasst, gemessen wird.

13. Verfahren nach Anspruch 12, **dadurch gekennzeichnet, dass** eine weitere Kennlinie von Temperaturen (T) und Blasenlängen (L) der Gasblase (116) gespeichert wird, die Blasenlänge (L) der Gasblase (116) mittels der Lichtquelle (119) und des Fotodetektors (120) gemessen wird und die zur gemessenen Blasenlänge (L) zugehörige Temperatur (T) anhand der weiteren Kennlinie ermittelt wird.

14. Verfahren nach Anspruch 1, **dadurch gekennzeichnet, dass** aus der Messentfernung (D_{H}), dem ersten Höhenversatz (H₁) und dem zweiten Höhenversatz (H₂) ein Korrekturwinkel (θ) berechnet wird und der Korrekturwinkel (θ) als neue Nulllage für die überprüfte Horizontalachse (51, 52) gespeichert wird, wenn die Differenz (Δ) grösser als die Maximaldifferenz (Δₘₐₓ) ist.

15. Verfahren nach Anspruch 14, **dadurch gekennzeichnet, dass** die kalibrierte Horizontalachse (51, 52) in einer weiteren Prüfschleife überprüft wird, wobei der horizontale Zustand der Horizontalachse (51, 52) durch die neue Nulllage definiert ist.
